# EUROPEAN PATENT APPLICATION

(11) **EP 4 809 840 A1**
(43) Date of publication of application: **23.09.2026**
(21) Application number: 24891609.0
(22) Date of filing: 21.08.2024
(51) Int. Cl.: A24F 40/465, H05B 6/10, H05B 6/36, C08J 5/18, A24F 40/46, H05B 3/34, H05B 3/14, H05B 3/18

(54) **AEROSOL-GENERATING APPARATUS**

(30) Priority: 15.11.2023 KR 20230158066; 13.02.2024 KR 20240020238
(71) Applicant: KT&G Corporation, Daedeok-gu Daejeon 34337 (KR)
(72) Inventor: KIM, Dongsung, Seoul 06310 (KR); AN, Hwikyeong, Seoul 02721 (KR); KWON, Youngbum, Yongin-si Gyeonggi-do 16930 (KR); KIM, Yonghwan, Anyang-si Gyeonggi-do 13970 (KR)
(74) Representative: Schornack, Oliver
(86) International application number: PCT/KR2024/012412
(87) International publication number: WO 2025/105660

(57) **Abstract**

An aerosol-generating device is disclosed. The aerosol-generating device of the present disclosure includes a body, a power supply mounted to the body, and a hollow heater assembly mounted to the body and providing an insertion space with one side open, the heater assembly includes a sheet formed to be elongated, a susceptor attached to the sheet, and an electrically conductive track attached to the sheet and configured to generate heat in response to power received from the power supply, and the susceptor is disposed so as to be spaced apart from the electrically conductive track in the longitudinal direction of the sheet.

## Description

### [Technical Field]

The present disclosure relates to an aerosol-generating device.

### [Background Art]

An aerosol-generating device is a device that extracts certain components from a medium or a substance by forming an aerosol. The medium may contain a multicomponent substance. The substance contained in the medium may be a multicomponent flavoring substance. For example, the substance contained in the medium may include a nicotine component, an herbal component, and/or a coffee component. Recently, various studies on aerosol-generating devices have been conducted.

The aerosol-generating device employs a blade-shaped or rod-shaped internal heater that is inserted into an aerosol-generating substance to heat the aerosol-generating substance or a cylindrical external heater that accommodates an aerosol-generating substance to heat the aerosol-generating substance.

Because heat generated by a conventional external heater is transferred outside the heater, internal temperature of the device may rise, operation of a sensor or the like disposed in the device may be unstable, and thermal efficiency may deteriorate.

### [Disclosure]

### [Technical Problem]

It is an object of the present disclosure to solve the above and other problems.

It is another object of the present disclosure to provide an aerosol-generating device including a heater assembly formed in such a manner that a thin-film-type susceptor and an electrically conductive pattern disposed on one sheet are rolled together with the sheet.

It is still another object of the present disclosure to provide an aerosol-generating device having a structure in which stepped portions formed when the sheet is rolled are disposed so as to be misaligned from each other.

It is still another object of the present disclosure to provide an aerosol-generating device having a structure in which the thin-film-type susceptor is capable of directly contacting an inserted stick.

It is still another object of the present disclosure to provide an aerosol-generating device having a structure in which the sheet surrounds the outer side of the electrically conductive pattern multiple times.

It is still another object of the present disclosure to provide an aerosol-generating device including brackets capable of fixing the upper end and lower end of the heater assembly.

It is still another object of the present disclosure to provide an aerosol-generating device in which the susceptor and the electrically conductive pattern are attached to the sheet through thermal fusion.

### [Technical Solution]

In accordance with an aspect of the present disclosure for accomplishing the above objects, there is provided an aerosol-generating device including a body, a power supply mounted to the body, and a hollow heater assembly mounted to the body and providing an insertion space with one side open, wherein the heater assembly includes a sheet formed to be elongated, a susceptor attached to the sheet, and an electrically conductive track attached to the sheet and configured to generate heat in response to power received from the power supply, and the susceptor is disposed so as to be spaced apart from the electrically conductive track in the longitudinal direction of the sheet.

### [Advantageous Effects]

According to at least one of embodiments of the present disclosure, because a heater assembly is formed in such a manner that a thin-film-type susceptor and an electrically conductive pattern disposed on one sheet are rolled together with the sheet, the size of a device may be reduced.

According to at least one of embodiments of the present disclosure, because the heater assembly is formed in such a manner that the thin-film-type susceptor and the electrically conductive pattern disposed on one sheet are rolled together with the sheet, the process of producing the heater assembly may be simplified.

According to at least one of embodiments of the present disclosure, because stepped portions formed when the sheet is rolled are disposed so as to be misaligned from each other, it may be possible to prevent parts of the heater assembly from deteriorating to different degrees.

According to at least one of embodiments of the present disclosure, because stepped portions formed when the sheet is rolled are disposed so as to be misaligned from each other, a stick inserted into the heater assembly may be evenly heated.

According to at least one of embodiments of the present disclosure, because the thin-film-type susceptor defines an insertion space and directly contacts the stick inserted into the insertion space, efficiency of transfer of heat to the stick may be increased.

According to at least one of embodiments of the present disclosure, because the sheet surrounds the outer side of the electrically conductive pattern multiple times, the heater assembly may be effectively sealed, and release of heat to the outside may be minimized.

According to at least one of embodiments of the present disclosure, it may be possible to ensure the rigidity of the heater assembly due to brackets capable of fixing the upper end and lower end of the heater assembly.

According to at least one of embodiments of the present disclosure, because the susceptor and the electrically conductive pattern are attached to the sheet through thermal fusion, the bonding structure of the heater assembly may be simplified.

Additional applications of the present disclosure will become apparent from the following detailed description. However, because various changes and modifications will be clearly understood by those skilled in the art within the spirit and scope of the present disclosure, it should be understood that the detailed description and specific embodiments, such as preferred embodiments of the present disclosure, are merely given by way of example.

### [Description of Drawings]

FIGs. 1 and 2 are views showing an aerosol-generating device according to embodiments of the present disclosure.
FIG. 3 is a view showing a stick according to an embodiment of the present disclosure.
FIG. 4 is a front perspective view of a heater assembly according to an embodiment of the present disclosure.
FIG. 5 is an exploded perspective view of the heater assembly according to the embodiment of the present disclosure.
FIG. 6 is a view showing a susceptor of the heater assembly according to the embodiment of the present disclosure.
FIG. 7 is a view showing an electrically conductive track of the heater assembly according to the embodiment of the present disclosure.
FIGs. 8 and 9 are views showing an unfolded state of the heater assembly according to the embodiment of the present disclosure.
FIGs. 10 and 11 are views showing brackets of the heater assembly according to the embodiment of the present disclosure.
FIG. 12 is a cross-sectional view of the heater assembly according to the embodiment of the present disclosure.
FIGs. 13 to 15 are cross-sectional views showing step-spacing structures of the heater assembly according to the embodiment of the present disclosure.
FIG. 16 is a block diagram of an aerosol-generating device according to an embodiment of the present disclosure.

### [Mode for Invention]

Hereinafter, the embodiments disclosed in the present specification will be described in detail with reference to the accompanying drawings. The same or similar elements are denoted by the same reference numerals even though they are depicted in different drawings, and redundant descriptions thereof will be omitted.

In the following description, with respect to constituent elements used in the following description, the suffixes "module" and "unit" are used only in consideration of facilitation of description, and do not have mutually distinguished meanings or functions.

In addition, in the following description of the embodiments disclosed in the present specification, a detailed description of known functions and configurations incorporated herein will be omitted when the same may make the subject matter of the embodiments disclosed in the present specification rather unclear. In addition, the accompanying drawings are provided only for a better understanding of the embodiments disclosed in the present specification and are not intended to limit the technical ideas disclosed in the present specification. Therefore, it should be understood that the accompanying drawings include all modifications, equivalents, and substitutions within the scope and sprit of the present disclosure.

It will be understood that although the terms "first", "second", etc., may be used herein to describe various components, these components should not be limited by these terms. These terms are only used to distinguish one component from another component.

It will be understood that when a component is referred to as being "connected to" or "coupled to" another component, it may be directly connected to or coupled to another component, or intervening components may be present. On the other hand, when a component is referred to as being "directly connected to" or "directly coupled to" another component, there are no intervening components present.

As used herein, the singular form is intended to include the plural forms as well, unless the context clearly indicates otherwise.

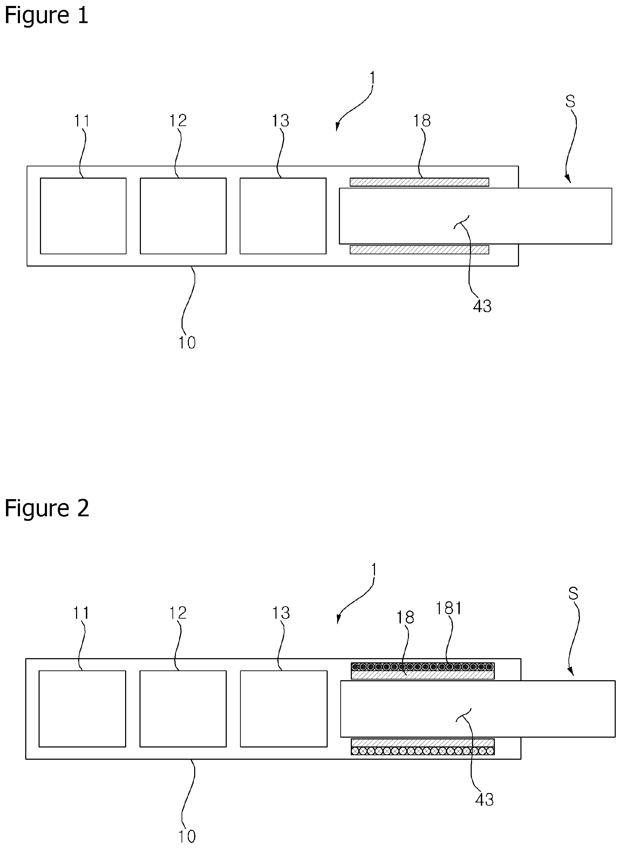

FIGs. 1 and 2 are views showing aerosol-generating devices 1 according to embodiments of the present disclosure.

Referring to FIGs. 1 and 2, an aerosol-generating device 1 according to embodiments of the present disclosure may include at least one of a power supply 11, a controller 12, a sensor 13, or a heater 18. At least one of the power supply 11, the controller 12, the sensor 13, or the heater 18 may be disposed in a body 10 of the aerosol-generating device. The body 10 may define a space having an open top to allow a stick S, which is an aerosol-generating article, to be inserted thereinto. The space having an open top may be referred to as an insertion space 43. The insertion space 43 may be formed so as to be depressed to a predetermined depth toward the interior of the body 10 so that the stick S is inserted at least partway thereinto. The depth of the insertion space 43 may correspond to the length of the portion of the stick S that contains an aerosol-generating substance and/or medium. The lower end of the stick S may be inserted into the body 10, and the upper end of the stick S may protrude to the outside of the body 10. A user may inhale air in a state of holding the upper end of the stick S, which is exposed to the outside, in the mouth.

The heater 18 may heat a stick S. The heater 18 may be disposed around a space into which the stick S is inserted and may be elongated upward. For example, the heater 18 may be formed in a shape of a tube including a cavity formed therein. The heater 18 may be disposed around an insertion space 43. The heater 18 may be disposed so as to surround at least a portion of the insertion space 43. The heater 18 may heat the insertion space 43 or the stick S inserted into the insertion space 43. The heater 18 may include an electro-resistive heater and/or an induction heater.

For example, referring to FIG. 1, the heater 18 may be a resistive heater. For example, the heater 18 may include an electrically conductive track and may be heated as current flows through the electrically conductive track. The heater 18 may be electrically connected to the power supply 11. The heater 18 may directly generate heat using current received from the power supply 11.

For example, referring to FIG. 2, the aerosol-generating device may include an induction coil 181 surrounding the heater 18. The induction coil 181 may cause the heater 18 to generate heat. The heater 18 may generate heat using a magnetic field generated by alternating current flowing through the induction coil 181. The magnetic field may pass through the heater 18 to generate an eddy current in the heater 18. The current may cause the heater 18 to generate heat.

Meanwhile, a susceptor may be included in the stick S, and the susceptor in the stick S may generate heat using a magnetic field generated by alternating current flowing through the induction coil 181.

The power supply 11 may supply power so that components of the aerosol-generating device operate. The power supply 11 may be referred to as a battery. The power supply 11 may supply power to at least one of the controller 12, the sensor 13, or the heater 18. The power supply 11 may supply power to the induction coil 181.

The controller 12 may control overall operation of the aerosol-generating device. The controller may be mounted on a printed circuit board (PCB). The controller 12 may control operation of at least one of the power supply 11, the sensor 13, or the heater 18. The controller 12 may control operation of a display, a motor, etc. mounted in the aerosol-generating device. The controller 12 may check the state of each of the components of the aerosol-generating device and may determine whether the aerosol-generating device is in an operable state.

The controller 12 may analyze a result of detection by the sensor 13 and may control subsequent processes. For example, the controller 12 may control, based on a result of detection by the sensor 13, power supplied to the heater 18 so that operation of the heater 18 commences or ends. For example, the controller 12 may control, based on a result of detection by the sensor 13, the amount of power supplied to the heater 18 and a power supply time so that the heater 18 is heated to a predetermined temperature or is maintained at an appropriate temperature.

The sensor 13 may include at least one of a temperature sensor, a puff sensor, or an insertion detection sensor. For example, the sensor 13 may detect at least one of the temperature of the heater 18, the temperature of the power supply 11, or the internal/external temperature of the body 10. For example, the sensor 13 may detect a user puff. For example, the sensor 13 may detect whether the stick S is inserted into the insertion space 43.

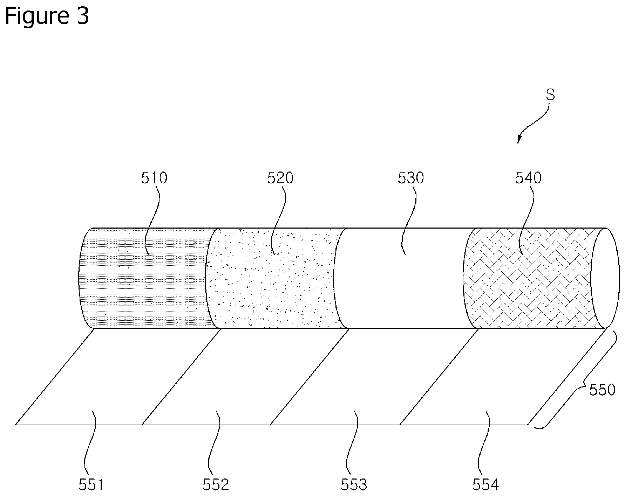

FIG. 3 is a view showing a stick according to an embodiment of the present disclosure.

Referring to FIG. 3, the stick S may include an aerosol base portion 510. The stick S may include a medium portion 520. The aerosol base portion 510 and the medium portion 520 may be referred to as a tobacco rod. The stick S may include a cooling portion 530. The stick S may include a filter portion 540. The stick S may include a wrapper 550 that surrounds the aerosol base portion 510, the medium portion 520, the cooling portion 530 and/or the filter portion 540. In FIG. 3, the wrapper 550 may include individual wrappers that surround the aerosol base portion 510, the medium portion 520, and the filter portion 540, respectively, and/or an outer shell that surrounds the aerosol base portion 510, the medium portion 520, and the filter portion 540, which are surrounded by the individual wrappers, in one piece.

The aerosol base portion 510 may be a portion formed in a preset shape by containing a moisturizer in pulp-based paper. The moisturizer (a base material) contained in the aerosol base portion 510 may include propylene glycol and glycerin. For example, the moisturizer of the aerosol base portion 510 may include propylene glycol and glycerin having a certain weight ratio to the weight of base paper. When the stick S is inserted into the aerosol-generating device 1 and is heated to a temperature above a predetermined level by the heater 18, moisturizer vapor may be generated from the aerosol base portion 510.

The medium portion 520 may include at least one of a sheet, a strand, or pipe tobacco formed of tiny bits of a shredded tobacco sheet. The medium portion 520 may be a portion that generates nicotine in order to provide a smoking experience to a user. When the temperature of the medium contained in the medium portion 520 rises to a predetermined temperature or higher, nicotine vapor may be generated from the medium portion 520. When the stick S is inserted into the aerosol-generating device 1, at least part of the aerosol base portion 510 and at least part of the medium portion 520 may face the heater 18. For example, a part of the upstream side or the downstream side of the aerosol base portion 510 and a part of the downstream side or the upstream side of the medium portion 520 may face the heater 18.

The length of the part of the medium portion 520 that faces the heater 18 may be greater than the length of the part of the aerosol base portion 510 that faces the heater 18. The length of the part of the aerosol base portion 510 that faces the heater 18 may be greater than or equal to half the overall length of the aerosol base portion 510. The length of the part of the medium portion 520 that faces the heater 18 may be greater than or equal to half the overall length of the medium portion 520.

The part of the aerosol base portion 510 and the part of the medium portion 520 that face the heater 18 may be heated by the heater 18. Because at least part of the aerosol base portion 510 containing the moisturizer is heated by the heater 18, moisturizer vapor may be generated. Because at least part of the medium portion 520 containing the medium is heated by the heater 18, nicotine vapor may be generated. As the stick S is disposed so as to vary a ratio of the length of the part of the aerosol base portion 510 that faces the heater 18 to the length of the part of the medium portion 520 that faces the heater 18, a ratio of the amount of moisturizer vapor generated to the amount of nicotine vapor generated may be appropriately adjusted.

In an embodiment, although the stick S is inserted into the aerosol-generating device 1, the medium portion 520 may not be directly heated by the heater 18. The medium portion 520 may be indirectly heated from the aerosol base portion 510 and the medium-portion wrapper (or the wrapper) surrounding the medium portion 520 through conduction, convection, and radiation. After the aerosol base portion 510 is heated through the heater 18, the temperature of the medium portion 520 may be indirectly increased.

The cooling portion 530 may be manufactured as a tube filter containing a predetermined weight of plasticizer. The moisturizer vapor and the nicotine vapor generated from the aerosol base portion 510 and the medium portion 520 may be mixed with each other to be aerosolized, and may be cooled while passing through the cooling portion 530. According to an embodiment, the cooling portion 530 may not be surrounded by the individual wrapper, unlike the aerosol base portion 510, the medium portion 520, and the filter portion 540.

The filter portion 540 may be a cellulose acetate filter. Meanwhile, there is no limitation on the shape of the filter portion 540. The filter portion 540 may be a cylindrical-type rod or may be of a tube type including a cavity formed therein. For example, when the filter portion 540 is composed of a plurality of segments, at least one of the plurality of segments may be manufactured in a different shape. The filter portion 540 may be manufactured so as to generate a flavor. In an example, a flavoring agent may be sprayed to the filter portion 540, or a separate fiber coated with a flavoring agent may be inserted into the filter portion 540.

In addition, the filter portion 540 may include at least one capsule. Here, the capsule may perform a function of generating a flavor. For example, the capsule may be a structure that encapsulates a liquid containing a flavoring agent with a film, and may have a spherical or cylindrical shape. However, the disclosure is not limited thereto.

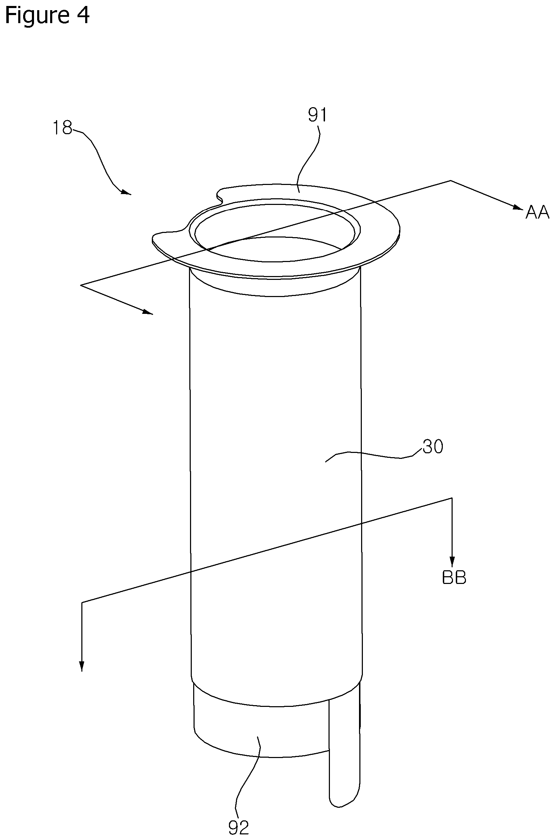

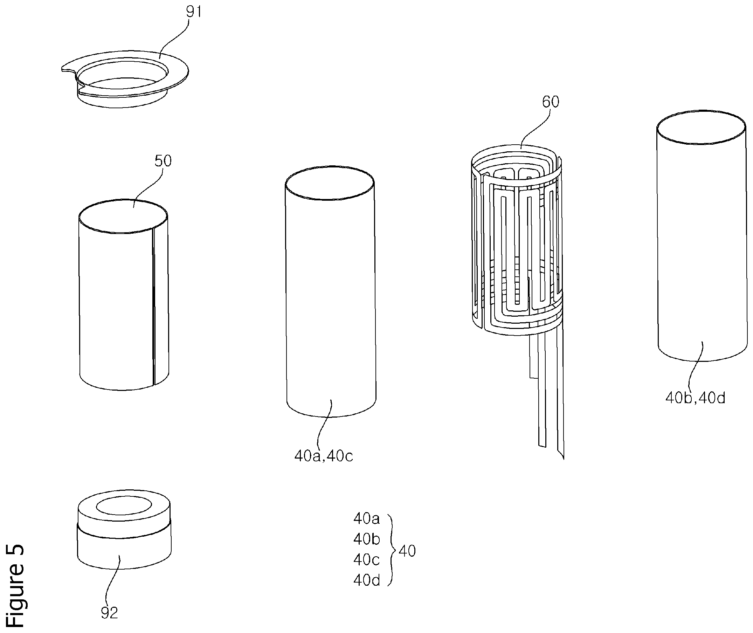

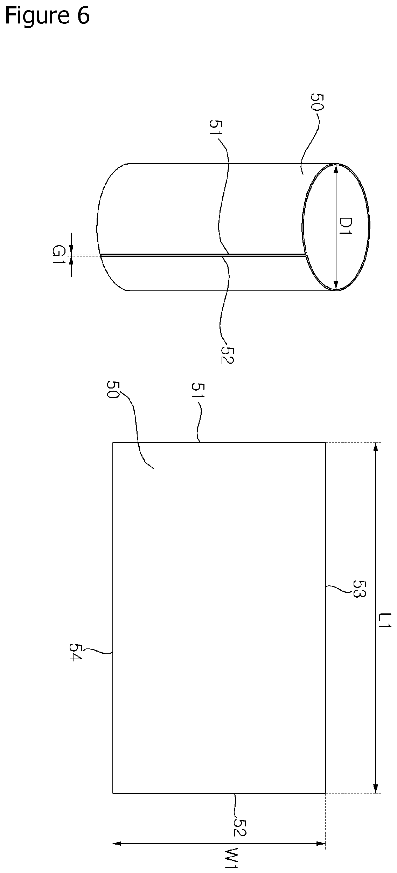

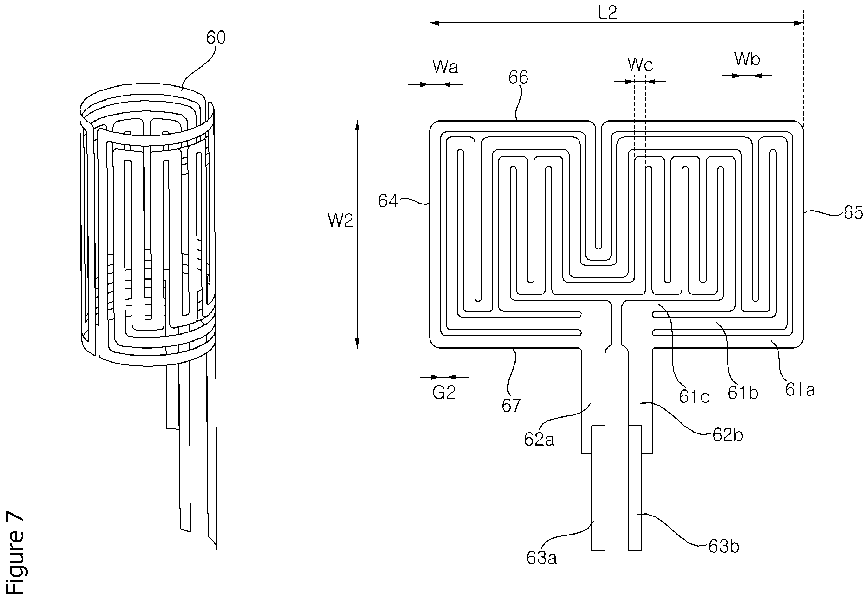

FIG. 4 is a front perspective view of a heater assembly according to an embodiment of the present disclosure, FIG. 5 is an exploded perspective view of the heater assembly according to the embodiment of the present disclosure, FIG. 6 is a view showing a susceptor of the heater assembly according to the embodiment of the present disclosure, and FIG. 7 is a view showing an electrically conductive track of the heater assembly according to the embodiment of the present disclosure.

Referring to FIG. 4, the heater 18 may include a heater assembly 30. The heater assembly 30 may be elongated. The heater assembly 30 may have a tubular shape or a cylindrical shape including a cavity formed therein. The heater assembly 30 may be disposed in the body 10 of the aerosol-generating device 1. The heater assembly 30 may surround the insertion space 43 (refer to FIGs. 1, 2, 11 to 14). The heater assembly 30 may provide the insertion space 43. The insertion space 43 or the stick S inserted into the insertion space 43 may be heated by the heater assembly 30. The heater assembly 30 may include a pair of leads 63a and 63b (refer to FIG. 7) that protrude outwardly and are electrically connected to the power supply 11.

The heater 18 may include a pair of brackets 91 and 92. The pair of brackets 91 and 92 may be coupled to the top and bottom of the heater assembly 30, respectively. The pair of brackets 91 and 92 may be coupled to the heater assembly 30 to support the heater assembly 30.

Referring to FIGs. 5 to 7, the heater assembly 30 may include a sheet 40, a susceptor 50, and an electrically conductive track 60.

The susceptor 50 may have a cylindrical shape in which a thin-film-type metal sheet is rolled up. The susceptor 50 may be referred to as a heat conductor, a heat conducting member, a heat spreading member, or a pipe. The susceptor 50 may be made of stainless steel, aluminum, or an alloy without being limited thereto.

The thin-film-type metal sheet may have a rectangular shape that is elongated in one direction such that the length L1 thereof is greater than the width W1 thereof. The length and width of the thin-film-type metal sheet may be defined as the length and width of the susceptor 50, respectively. The length L1 of the susceptor 50 may be 17.5 mm to 27.5 mm, and the width W1 of the susceptor 50 may be 10 mm to 20 mm. Preferably, the length L1 of the susceptor 50 may be 20 mm to 25 mm, and the width W1 of the susceptor 50 may be 12.5 mm to 17.5 mm. The susceptor 50 may have a cylindrical shape and may have a diameter D1 of 7 mm to 8 mm.

One end 51 of the susceptor 50 may be spaced apart from the other end 52 of the susceptor 50 in the peripheral direction of the susceptor 50 or the peripheral direction of the insertion space 43. A gap G1 may be formed between one end 51 and the other end 52 of the susceptor. The width of the gap G1 may be 0.5 mm or less. As the width of the gap G1 increases, the area of a portion of the stick S that is not heated due to the gap G1 may increase. Therefore, 0.5 mm may correspond to an upper limit width at which aerosol is generated from the stick S in a preset minimum required amount or more.

Accordingly, when forming the susceptor 50 in a cylindrical shape by rolling the thin-film-type sheet, it is possible to prevent a phenomenon in which the shape of the susceptor 50 is distorted or parts of the susceptor 50 overlap each other due to an error in the assembly process.

The electrically conductive track 60 may have a rolled-cylindrical shape. The electrically conductive track 60 may be formed by etching a metal thin film using a laser. The electrically conductive track 60 may generate heat upon receiving power from the power supply 11. The electrically conductive track 60 may be referred to as a heat-generating member. The resistance value of the electrically conductive track 60 may be 1.0 to 1.2 ohm.

The electrically conductive track 60 may be made of stainless steel, aluminum, or an alloy without being limited thereto.

The electrically conductive track 60 may have a rectangular shape that is elongated in one direction such that the length L2 thereof is greater than the width W2 thereof. The length L2 of the electrically conductive track 60 may be 18 mm to 28 mm, and the width W2 of the electrically conductive track 60 may be 10 mm to 20 mm. Preferably, the length L2 of the electrically conductive track 60 may be 20.5 mm to 25.5 mm, and the width W2 of the electrically conductive track 60 may be 12.5 mm to 17.5 mm.

The electrically conductive track 60 may include a heat-generating track 61 and a connecting portion 62. The heat-generating track 61 may include one or more tracks 61a, 61b, and 61c. The first track 61a may be disposed at the outermost portion of the electrically conductive track 60 and may have a rectangular shape overall. The second track 61b may be disposed inside the first track 61a, and the third track 61c may be disposed inside the second track 61b.

Each of the first to third tracks 61a, 61b, and 61c may include at least one bent portion and may have a serpentine shape. The number of bent portions of the first track 61a may be less than the number of bent portions of the second track 61b. The number of bent portions of the second track 61b may be less than the number of bent portions of the third track 61c. The first to third tracks 61a, 61b, and 61c may be spaced apart from each other. One end of each of the first to third tracks 61a, 61b, and 61c may be connected to one end of each of the other tracks, and the other end of each of the first to third tracks 61a, 61b, and 61c may be connected to the other end of each of the other tracks. In other words, the first to third tracks 61a, 61b, and 61c may be connected in parallel to each other.

The width Wa of the first track 61a may be 0.5 mm to 0.7 mm. The width Wb of the second track 61b may be 0.6 mm to 0.8 mm. The width Wc of the third track 61c may be 0.65 mm to 0.85 mm. A gap G2 by which the second track 61b is spaced apart from the first track 61a or the third track 61c may be 0.3 mm to 0.4 mm.

The width Wa of the first track 61a may be less than the width Wb of the second track 61b and the width Wc of the third track 61c. The width Wb of the second track 61b may be less than the width Wc of the third track 61c. The gap G2 by which the second track 61b is spaced apart from the first track 61a or the third track 61c may be less than the width Wa of the first track 61a, the width Wb of the second track 61b, and the width Wc of the third track 61c.

The length of the first track 61a may be less than the length of the second track 61b and the length of the third track 61c.

Accordingly, in the electrically conductive track 60, resistance deviation between the first track 61a disposed at the outermost portion of the electrically conductive track 60, the second track 61b disposed inside the first track 61a, and the third track 61c disposed inside the second track 61b may be reduced, and deviation between the amounts of heat generated from the respective tracks may be reduced.

In addition, because the gap between the tracks is less than the widths of the tracks, the heat-generating area of the electrically conductive track 60 may be increased, and the insertion space 43 or the stick S inserted into the insertion space 43 may be evenly heated by the electrically conductive track 60.

The connecting portion 62 may protrude outwardly from one side of the heat-generating track 61. The connecting portion 62 may be formed integrally with the heat-generating track 61. The connecting portion 62 may include a first connecting portion 62a and a second connecting portion 62b. The first connecting portion 62a may be connected to one end of each of the first to third tracks 61a, 61b, and 61c, and the second connecting portion 62b may be connected to the other end of each of the first to third tracks 61a, 61b, and 61c.

The lead 63 may be connected to the connecting portion 62. The lead 63 may be elongated in the direction in which the connecting portion 62 protrudes. The lead 63 may electrically connect the connecting portion 62 to the power supply 11 or a heater driving circuit (not shown). The lead 63 may be made of a material having a lower temperature coefficient of resistance (TCR) than the electrically conductive track 60. The lead 63 may be attached to the connecting portion 62 through welding, but the disclosure is not limited thereto.

Accordingly, change in the temperature of the electrically conductive track 60 obtained based on the change in the resistance of the electrically conductive track 60 may be accurately measured.

The sheet 40 may be elongated. The susceptor 50 and the electrically conductive track 60 may be attached to the sheet 40. The susceptor 50 and the electrically conductive track 60 may be rolled in the longitudinal direction of the sheet 40 together with the sheet 40. The sheet 40 may form multiple layers in the hollow heater assembly 30. The sheet 40 may form at least one layer surrounding the periphery of the susceptor 50 outside the susceptor 50 and at least one layer surrounding the periphery of the electrically conductive track 60 outside the electrically conductive track 60.

The sheet 40 may be a flexible sheet, and may be formed of a material having heat resistance. The sheet 40 may include, but is not limited to, polyimide or polyetheretherketone (PEEK), and may include other materials having elasticity, heat resistance, and electrical insulation.

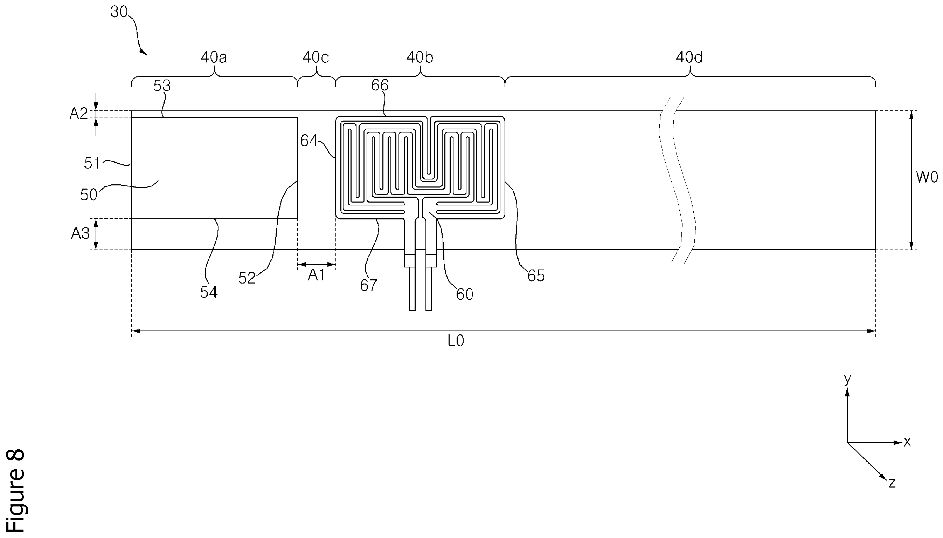

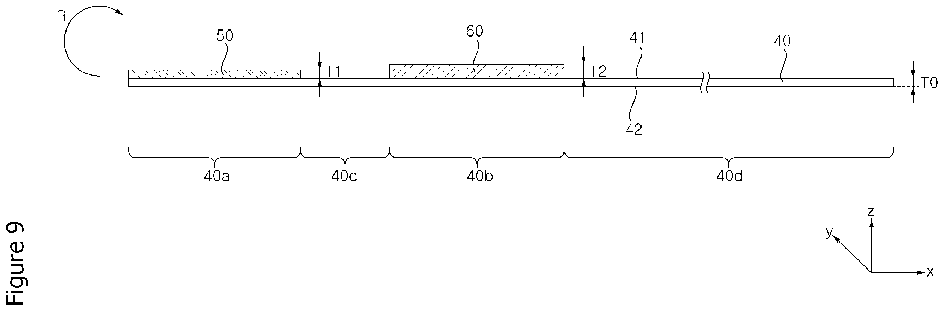

The length L0 of the sheet 40 may be 115 mm to 165 mm, and the width WO of the sheet 40 may be 15 mm to 25 mm. Preferably, the length L0 of the sheet 40 may be 130 mm to 150 mm, and the width WO of the sheet 40 may be 17.5 mm to 22.5 mm. The features of the susceptor 50 and the electrically conductive track 60 being disposed on the sheet 40 will be described in detail with reference to FIGs. 8 and 9.

FIGs. 8 and 9 are views showing an unfolded state of the heater assembly according to the embodiment of the present disclosure.

Referring to FIGs. 8 and 9, the heater assembly 30 may include the sheet 40, the susceptor 50, and the electrically conductive track 60. The susceptor 50 and the electrically conductive track 60 may be disposed on the sheet 40. The susceptor 50 and the electrically conductive track 60 may be sequentially disposed in the longitudinal direction of the sheet 40.

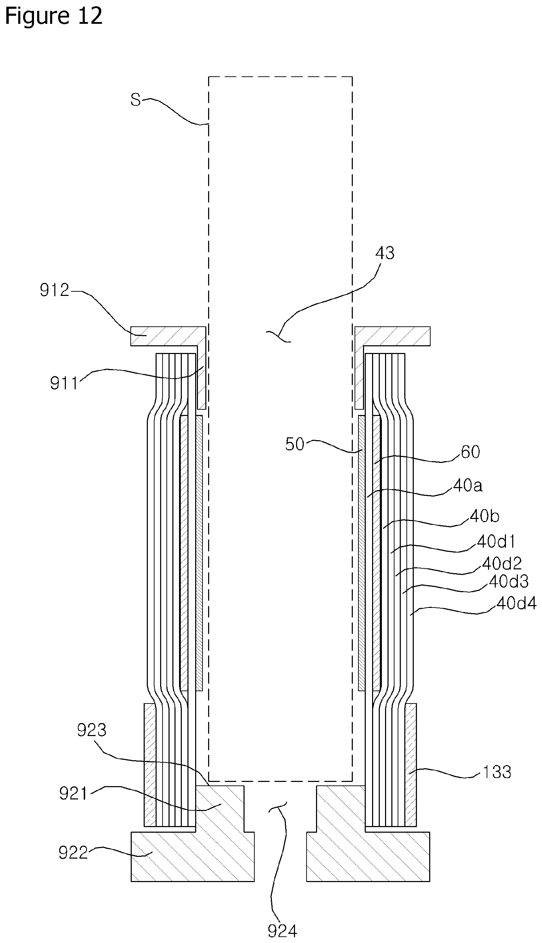

The susceptor 50 and the electrically conductive track 60 may be disposed on the same surface of the sheet 40. The sheet 40 may be one sheet elongated in one direction or in the x direction. The sheet 40 may include a first surface 41 that is flat and a second surface 42 that is formed opposite the first surface 41 in the thickness direction thereof. The susceptor 50 and the electrically conductive track 60 may be disposed on the first surface 41 of the sheet 40. The sheet 40 may be rolled so that the first surface 41 faces the central axis of the hollow heater assembly 30 or the insertion space 43 (refer to FIG. 12). The heater assembly 30 may be formed by rolling the susceptor 50 and the electrically conductive track 60 together with the sheet 40.

When an elastic object is rolled up, springback may occur. When an object is deformed, the object has a property of resisting deformation. Springback may be defined as a phenomenon that occurs due to restoring force resisting deformation. When the susceptor 50 and the electrically conductive track 60 are disposed on the same surface of the sheet 40, springback may occur less than when the susceptor 50 and the electrically conductive track 60 are disposed on different surfaces of the sheet 40.

Accordingly, springback occurring during the process of assembling the hollow heater assembly 30 may be reduced, thereby reducing defects in the heater assembly.

The susceptor 50 may be disposed adjacent to one end of the sheet 40 in the longitudinal direction of the sheet 40. One end 51 of the susceptor 50 may be aligned parallel to one end of the sheet 40. The susceptor 50 may be disposed so as to be spaced apart from the electrically conductive track 60. For example, the electrically conductive track 60 may be disposed so as to be spaced apart from the susceptor 50 in the longitudinal direction of the sheet 40. One end 64 of the electrically conductive track 60 may be spaced apart from the other end 52 of the sheet 40 by a predetermined distance A1. The upper end 53 of the susceptor 50 may be aligned with the upper end 66 of the electrically conductive track 60. The lower end 54 of the susceptor 50 may be aligned with the lower end 67 of the electrically conductive track 60.

The width WO of the sheet 40 may be greater than the width W1 of the susceptor 50 and the width W2 of the electrically conductive track 60. The susceptor 50 and the electrically conductive track 60 may be disposed closer to the upper end of the sheet 40 than to the lower end of the sheet 40 in the width direction of the sheet 40 or in the y direction. A distance A2 by which the upper end 53 of the susceptor 50 and/or the upper end 66 of the electrically conductive track 60 is spaced apart from the upper end of the sheet 40 may be less than a distance A3 by which the lower end 54 of the susceptor 50 and/or the lower end 67 of the electrically conductive track 60 is spaced apart from the lower end of the sheet 40.

A distance A1 by which the susceptor 50 is spaced apart from the electrically conductive track 60 in the longitudinal direction of the sheet 40 may be less than the length L2 of the electrically conductive track 60 defined in the longitudinal direction of the sheet 40. The susceptor 50 and the electrically conductive track 60 may be electrically insulated from each other by the sheet 40. As the distance A1 between the susceptor 50 and the electrically conductive track 60 increases, the number of layers of the sheet 40 disposed between the susceptor 50 and the electrically conductive track 60 in the hollow heater assembly 30 may be increased or the area of the sheet 40 may be increased. When the distance A1 between the susceptor 50 and the electrically conductive track 60 is less than the length L2 of the electrically conductive track 60, the number of layers of the sheet 40 disposed between the susceptor 50 and the electrically conductive track 60 may be two or less.

Accordingly, heat generated from the electrically conductive track 60 may be more efficiently transferred to the susceptor 50.

In the longitudinal direction of the sheet 40, the length L2 of the electrically conductive track 60 may be greater than the length L1 of the susceptor 50. In the hollow heater assembly 30, the electrically conductive track 60 may surround the susceptor 50 outside the susceptor 50. Because the length L2 of the electrically conductive track 60 is greater than the length L1 of the susceptor 50, the area of the portion of the electrically conductive track 60 that surrounds the susceptor 50 may be increased.

Accordingly, the area of transfer of heat from the electrically conductive track 60 to the susceptor 50 may be increased, and the insertion space 43 or the stick S in the insertion space 43 may be more evenly heated by the susceptor 50 and the electrically conductive track 60. In addition, because the area of the electrically conductive track 60 is increased, freedom of design of the shape of the track may be increased.

The sheet 40 may include first to fourth parts 40a, 40b, 40c, and 40d. The susceptor 50 may be disposed on the first part 40a. The electrically conductive track 60 may be disposed on the second part 40b. The third part 40c may be disposed between the first part 40a and the second part 40b in the longitudinal direction of the sheet 40 and may be connected to the first part 40a and the second part 40b. The fourth part 40d may extend from the second part 40b in the longitudinal direction of the sheet 40 and may be opposite the third part 40c with respect to the second part 40b. The sheet 40 may be rolled in a direction from one end of the first part 40a toward one end of the fourth part 40d. In the hollow heater assembly 30, the second part 40b may be disposed outside the first part 40a, and the fourth part 40d may be disposed outside the second part 40b.

The susceptor 50 and the electrically conductive track 60 may be attached to the sheet 40 through thermal fusion. The susceptor 50 and the electrically conductive track 60 may be disposed on the first surfaces 41 of the first part 40a and second part 40b of the sheet 40, respectively. The susceptor 50 and the electrically conductive track 60 may be attached to the sheet 40 by heating the sheet 40, the susceptor 50, and the electrically conductive track 60 to a predetermined temperature or higher.

Accordingly, the bonding structure of the heater assembly may be simplified.

The thickness T1 of the susceptor 50 may be 0.01 mm to 0.03 mm. The thickness T2 of the electrically conductive track 60 may be 0.03 mm to 0.05 mm. The thickness T0 of the sheet 40 may be 0.015 mm to 0.035 mm. The thickness T2 of the electrically conductive track 60 may be greater than the thickness T0 of the sheet 40 and the thickness T1 of the susceptor 50. The thickness T0 of the sheet 40 may be greater than the thickness T1 of the susceptor 50. The thin-film-type susceptor 50 and the electrically conductive track 60 may be rolled together with one thin sheet 40 to form the hollow heater assembly 30.

Accordingly, the size of the hollow heater assembly 30 may be reduced, thus leading to reduction in the size of the aerosol-generating device 1. In addition, the process of producing the heater assembly 30 may be simplified, and the manufacturing cost thereof may be reduced.

In addition, because the thickness T0 of the sheet 40 is formed to be greater than the thickness T1 of the susceptor 50, the susceptor 50 and the electrically conductive track 60 may be prevented from being electrically shorted. In addition, because the thickness T2 of the electrically conductive track 60 is formed to be greater than the thickness T1 of the susceptor 50, the electrically conductive track 60 may stably support the outer side of the susceptor 50 and may provide more heat to the susceptor 50.

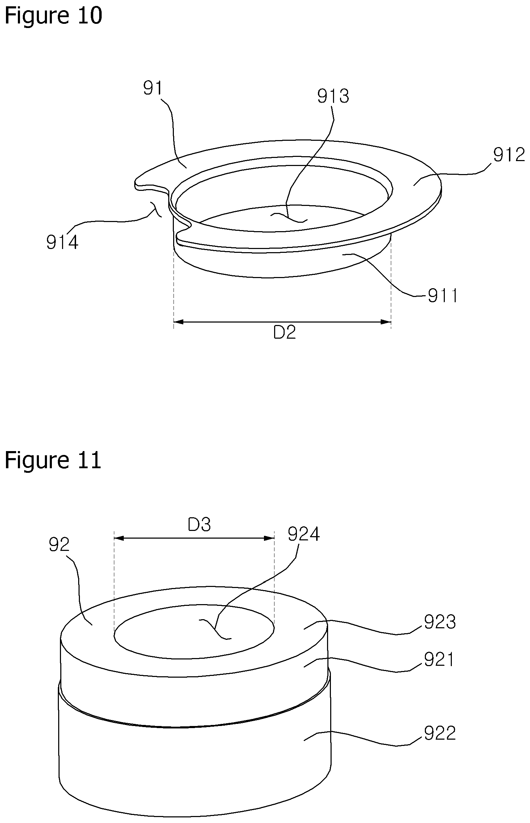

FIGs. 10 and 11 are views showing brackets according to an embodiment of the present disclosure.

Referring to FIG. 10 together with FIGs. 4 and 5, the heater assembly 30 may be combined with brackets 91 and 92. The first bracket 91 may be attached or coupled to an upper side of the heater assembly 30 corresponding to the opening of the insertion space 43. The first bracket 91 may include a first bracket body 911, a first flange 912, an insertion hole 913, and an alignment recess 914.

The first bracket body 911 may have a cylindrical shape. The outer diameter D2 of the first bracket body 911 may be equal to or greater than the diameter of the upper end portion of the heater assembly 30. The first bracket body 911 may extend in the peripheral direction. The first bracket body 911 may be attached to or press-fitted into the upper end portion of the heater assembly 30. The first flange 912 may protrude from the upper end portion of the first bracket body 911 in the radially outward direction. The first flange 912 may extend in the peripheral direction. The first flange 912 may surround the upper end portion of the first bracket body 911. The insertion hole 913 may be formed so as to penetrate the central portion of the first bracket 91 in the upward-downward direction. The boundary portion between the first flange 912 and the first bracket body 911 may have a shape that is convexly bent from the inner circumferential surface of the first bracket body 911 to the upper surface of the first flange 912. The alignment recess 914 may be formed by depressing one side of the flange 912 in the radially inward direction. The alignment recess 914 may have a shape corresponding to a protrusion formed at the body 10. The alignment recess 914 may be coupled to the protrusion formed at the body 10. Due to the alignment recess 914, the heater assembly 30 may be prevented from rotating in the body 10 and may be stably coupled to the body 10. The first bracket 91 may be made of stainless steel, aluminum, or an alloy without being limited thereto.

Referring to FIG. 11 together with FIGs. 4 and 5, the second bracket 92 may be attached or coupled to a lower side of the heater assembly 30. The second bracket 92 may include a second bracket body 921, a second flange 922, and a hole 924.

The second bracket body 921 may have a cylindrical shape. The outer diameter of the second bracket body 921 may be equal to or greater than the diameter of the lower end portion of the heater assembly 30, and the inner diameter D3 of the second bracket body 921 may be less than the diameter of the lower end portion of the heater assembly 30. The second bracket body 921 may extend in the peripheral direction. The second bracket body 921 may be attached to or press-fitted into the lower end portion of the heater assembly 30. The second flange 922 may protrude from the lower end portion of the second bracket body 921 in the radially outward direction. The second flange 922 may extend in the peripheral direction. The second flange 922 may surround the lower end portion of the second bracket body 921. The hole 924 may be formed so as to penetrate the central portion of the second bracket 92 in the upward-downward direction. The second bracket 92 may be made of polyetheretherketone (PEEK) without being limited thereto.

The first bracket 91 and the second bracket 92 may support the upper end and lower end of the heater assembly 30, respectively. The upper end of the heater assembly 30 may be fixed to or supported by the first bracket 91. The lower end of the heater assembly 30 may be fixed to or supported by the second bracket 92.

Accordingly, the susceptor 50, the electrically conductive track 60, and the sheet 40 may stably fix both ends of the heater assembly 30 formed in a rolled shape, thereby ensuring the rigidity of the heater assembly 30.

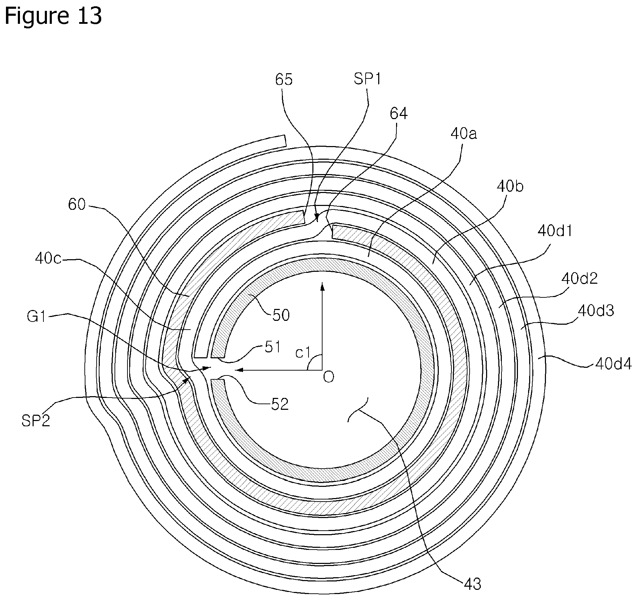

FIG. 12 is a cross-sectional view of the heater assembly according to the embodiment of the present disclosure, and FIGs. 13 to 15 are cross-sectional views showing step-spacing structures of the heater assembly according to the embodiment of the present disclosure. FIG. 12 shows the cross-section of the heater assembly cut along line AA in FIG. 4, and FIGs. 13 to 15 show the cross-sections of the heater assembly cut along line BB in FIG. 4.

Referring to FIG. 12, the susceptor 50 may be located at the innermost portion of the hollow heater assembly 30. The insertion space 43 may be disposed inside the susceptor 50. The susceptor 50 may define at least a portion of the insertion space 43. The susceptor 50 may surround at least a portion of the insertion space 43. The inner circumferential surface of the susceptor 50 may be exposed to the insertion space 43. The susceptor 50 may face the stick S inserted into the insertion space 43. At least a portion of the inner circumferential surface of the susceptor 50 may be in contact with the outer circumferential surface of the stick S inserted into the insertion space 43.

Accordingly, the thin-film-type susceptor defines at least a portion of the insertion space and is in direct contact with the stick inserted into the insertion space, thereby increasing efficiency of transfer of heat to the stick.

The susceptor 50 and the electrically conductive track 60 may be spaced apart from the upper end and lower end of the sheet 40. In the hollow heater assembly 30, the upper and lower end portions of the first part 40a and the upper and lower end portions of the second part 40b may be in contact with each other. The electrically conductive track 60 may be sealed from the outside due to the structure in which the upper and lower end portions of the first part 40a and the upper and lower end portions of the second part 40b are in contact with each other and the first to fourth parts 40a, 40b, 40c, and 40d are rolled.

The hollow heater assembly 30 may be combined with the brackets 91 and 92. The brackets 91 and 92 may be bonded to or press-fitted into the heater assembly 30. In the state in which the hollow heater assembly 30 is combined with the brackets 91 and 92, the heater assembly 30 and the brackets 91 and 92 may be heated to a predetermined temperature or higher.

Accordingly, the heater assembly may be sealed from the outside, and release of heat generated from the electrically conductive pattern to the outside of the heater assembly may be minimized.

The insertion hole 913 in the first bracket 91 may communicate with an upper side of the insertion space 43. The hole 924 in the second bracket 92 may communicate with a lower side of the insertion space 43. The stick S may be inserted into the insertion space 43 through the insertion hole 913. Outside air may flow into the stick S via an end portion of the stick S through the hole 924 from the outside of the heater assembly 30. The inner circumferential surface of the first bracket body 911 may support at least a portion of the outer circumferential surface of the stick S inserted into the insertion space 43. The upper surface 923 of the second bracket body 921 may support at least a portion of the lower end of the stick S inserted into the insertion space 43. The first bracket 91 and the second bracket 92 may be spaced apart from the susceptor 50 in the longitudinal direction of the insertion space 43. In the longitudinal direction of the insertion space 43, the lower end of the first bracket body 911 may be spaced apart from the upper end 53 of the susceptor 50, and the upper end of the second bracket body 921 may be spaced apart from the lower end 54 of the susceptor 50.

A stick detection sensor 133 may be disposed in the heater assembly 30. The stick detection sensor 133 may detect insertion and/or removal of the stick S. For example, the stick detection sensor 133 may be an inductive sensor and/or a capacitance sensor. The stick detection sensor 133 may be disposed adjacent to the lower end of the insertion space 43. The stick detection sensor 133 may be disposed so as to surround at least a portion of the lower side of the heater assembly 30. The stick detection sensor 133 may be disposed so as to be in contact with the fourth part 40d or the outermost layer of the sheet 40 and to surround the fourth part 40d or the outermost layer. The stick detection sensor 133 may be disposed below the susceptor 50 and the electrically conductive track 60 in the longitudinal direction of the insertion space 43. The stick detection sensor 133 may be spaced apart from the susceptor 50 and the electrically conductive track 60 in the longitudinal direction of the insertion space 43.

Accordingly, transfer of heat generated by the susceptor 50 and the electrically conductive track 60 to the sensor 133 may be minimized. In addition, the accuracy of detection of the stick S by the sensor 133 may be increased.

Referring to FIG. 13 together with FIG. 12, the heater assembly 30 may include layers formed in the order of the susceptor 50, the first part 40a and/or third part 40c of the sheet 40, the electrically conductive track 60, and the fourth part 40d in the radially outward direction from the insertion space 43.

At least a portion of the sheet 40 may be disposed between the susceptor 50 and the electrically conductive track 60 and may form at least one layer between the susceptor 50 and the electrically conductive track 60. For example, the first part 40a may be in contact with the susceptor 50 and may surround the outer side of the susceptor 50. At least a portion of the sheet 40 may be disposed outside the electrically conductive track 60 and may form at least one layer outside the electrically conductive track 60. For example, the second part 40b may be in contact with the electrically conductive track 60 and may surround the outer side of the electrically conductive track 60. For example, the fourth part 40d may be in contact with the second part 40b and may surround the outer sides of the second part 40b and the electrically conductive track 60.

The length of the fourth part 40d defined in the longitudinal direction of the sheet 40 (refer to FIG. 8) may be greater than the length L2 of the electrically conductive track 60. For example, the length of the fourth part 40d may be at least 1 times the length L2 of the electrically conductive track 60. The fourth part 40d may surround the outer sides of the second part 40b and the electrically conductive track 60 one or more turns. The fourth part 40d may form at least one layer 40d1 surrounding the outer sides of the second part 40b and the electrically conductive track 60. The second part 40b and the fourth part 40d may form at least two layers surrounding the outer side of the electrically conductive track 60. For example, the length of the fourth part 40d may be at least 4 times the length L2 of the electrically conductive track 60. The fourth part 40d may surround the outer sides of the second part 40b and the electrically conductive track 60 four or more turns. The fourth part 40d may form at least four layers 40d1, 40d2, 40d3, and 40d4 surrounding the outer sides of the second part 40b and the electrically conductive track 60. The second part 40b and the fourth part 40d may form at least five layers surrounding the outer side of the electrically conductive track 60.

In the structure in which one sheet 40 is rolled to form multiple layers, a step may be formed at a connection portion between one layer and another layer. For example, the heater assembly 30 may have a step formed at a position at which one end 64 and the other end 65 of the electrically conductive track 60 in the longitudinal direction are disposed. The heater assembly 30 may have a step formed at a position at which one end 64 and the other end 65 of the electrically conductive track 60 are disposed in the peripheral direction of the insertion space 43. This step may be referred to as a first stepped portion SP1. For example, a gap G1 may be formed between one end 51 and the other end 52 of the susceptor 50 in the peripheral direction of the insertion space 43 (refer to FIGs. 5 and 6), and the heater assembly 30 may have a step formed at a position at which the gap G1 is formed in the peripheral direction of the insertion space 43. This step may be referred to as a second stepped portion SP2.

The first stepped portion SP1 may be disposed so as to be misaligned from the gap G1 or the second stepped portion SP2 in the radial direction of the insertion space 43 or the radial direction of the heater assembly 30. The first stepped portion SP may not overlap the gap G1 or the second stepped portion SP2 in the radial direction of the insertion space 43 or the radial direction of the heater assembly 30.

The first stepped portion SP1 may be spaced apart from the gap G1 or the second stepped portion SP2 by a predetermined angle. For example, an angle c1 formed between the first stepped portion SP1 and the gap G1 or the second stepped portion SP2 with respect to the center O or central axis of the heater assembly 30 may be 80 degrees to 100 degrees. Preferably, the angle c1 formed between the first stepped portion SP1 and the gap G1 or the second stepped portion SP2 may be about 90 degrees.

The angle c1 formed between the first stepped portion SP1 and the gap G1 or the second stepped portion SP2 in the hollow heater assembly 30 may increase in proportion to the distance A1 by which the susceptor 50 is spaced apart from the electrically conductive track 60 on the flat sheet 40. The distance A1 by which the susceptor 50 is spaced apart from the electrically conductive track 60 may be in the range of 0.23 to 0.28 times the length L1 of the susceptor 50 defined in the longitudinal direction of the sheet 40. Preferably, the distance A1 by which the susceptor 50 is spaced apart from the electrically conductive track 60 may be about 0.25 times the length L1 of the susceptor 50 defined in the longitudinal direction of the sheet 40.

Heat may not be evenly transferred to the insertion space 43 in the first stepped portion SP1 and the second stepped portion SP2 compared to the other portions surrounding the insertion space 43. As the aerosol-generating device 1 is repeatedly used, the degrees to which the first stepped portion SP1 and the second stepped portion SP2 deteriorate may be different from the degrees to which the other portions surrounding the insertion space 43 deteriorate. If the first stepped portion SP1 and the second stepped portion SP2 are disposed so as to overlap each other, the degrees of deterioration of the stepped portions may greatly differ from the degrees of deterioration of the other portions. In addition, a specific portion of the stick S inserted into the insertion space 43 may not be properly heated, and the corresponding portion may be more vulnerable to external impact than the other portions.

Because the first stepped portion SP1 and the second stepped portion SP2 are disposed so as to be misaligned from each other in the radial direction of the insertion space 43 while forming a predetermined angle therebetween, it may be possible to prevent the parts of the heater assembly 30 from deteriorating to different degrees and to evenly heat the stick S inserted into the insertion space 43. In addition, damage to the heater assembly 30 due to external impact may be minimized.

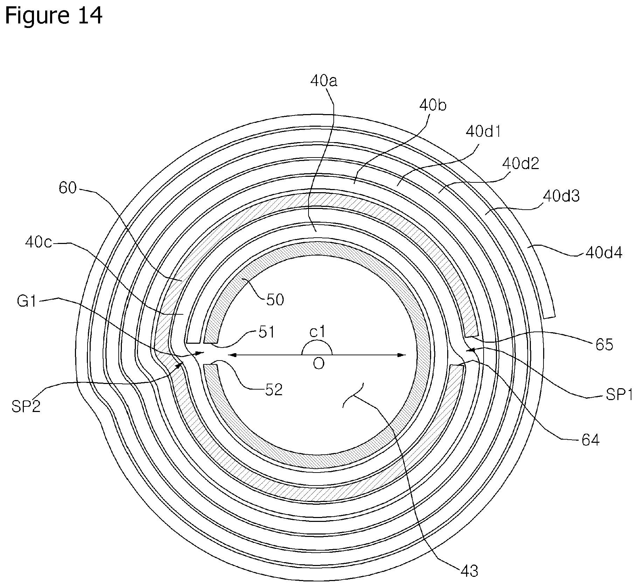

Referring to FIG. 14 together with FIG. 12, the heater assembly 30 may include layers formed in the order of the susceptor 50, the first part 40a and/or third part 40c of the sheet 40, the electrically conductive track 60, and the fourth part 40d in the radially outward direction from the insertion space 43. A detailed description of the features identical to those of the configuration shown in FIG. 13 will be omitted.

The first stepped portion SP1 may be disposed so as to be misaligned from the gap G1 or the second stepped portion SP2 in the radial direction of the insertion space 43 or the radial direction of the heater assembly 30. The first stepped portion SP may not overlap the gap G1 or the second stepped portion SP2 in the radial direction of the insertion space 43 or the radial direction of the heater assembly 30.

The first stepped portion SP1 may be spaced apart from the gap G1 or the second stepped portion SP2 by a predetermined angle. For example, the angle c1 formed between the first stepped portion SP1 and the gap G1 or the second stepped portion SP2 with respect to the center O or central axis of the heater assembly 30 may be 160 degrees to 200 degrees. Preferably, the angle c1 formed between the first stepped portion SP1 and the gap G1 or the second stepped portion SP2 may be about 180 degrees.

The distance A1 by which the susceptor 50 is spaced apart from the electrically conductive track 60 on the flat sheet 40 may be in the range of 0.45 to 0.55 times the length L1 of the susceptor 50 defined in the longitudinal direction of the sheet 40. Preferably, the distance A1 by which the susceptor 50 is spaced apart from the electrically conductive track 60 may be about 0.5 times the length L1 of the susceptor 50 defined in the longitudinal direction of the sheet 40.

When the angle c1 formed between the first stepped portion SP1 and the gap G1 or the second stepped portion SP2 is 160 degrees to 200 degrees or when the distance A1 by which the susceptor 50 is spaced apart from the electrically conductive track 60 is in the range of 0.45 to 0.55 times the length L1 of the susceptor 50, the first stepped portion SP1 and the gap G1 or the second stepped portion SP2 may face each other with respect to the insertion space 43.

Because the stepped portions SP1 and SP2 are disposed symmetrically with each other, it may be possible to more effectively prevent the parts of the heater assembly 30 from deteriorating to different degrees and to evenly heat the stick S inserted into the insertion space 43. In addition, damage to the heater assembly 30 due to external impact may be minimized.

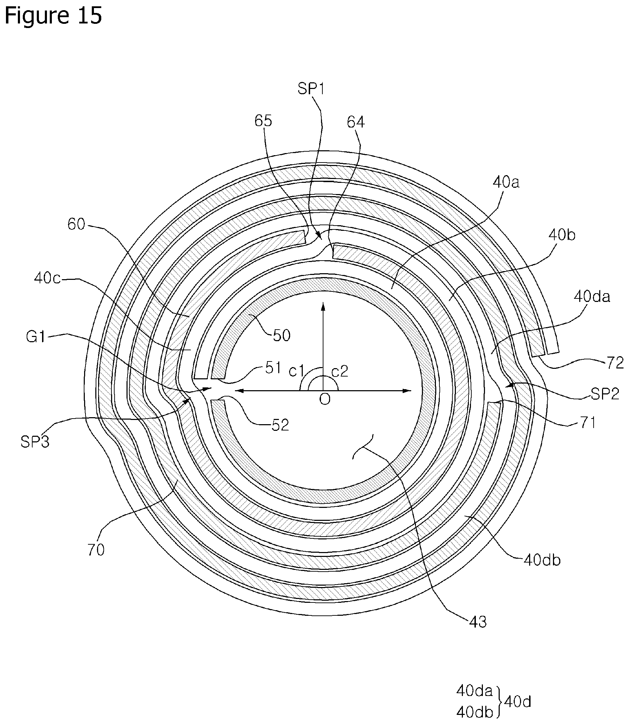

Referring to FIG. 15 together with FIG. 12, the heater assembly 30 may include layers formed in the order of the susceptor 50, the first part 40a and/or third part 40c of the sheet 40, the electrically conductive track 60, and the fourth part 40d in the radially outward direction from the insertion space 43. A detailed description of the features identical to those of the configuration shown in FIGs. 1 to 13 will be omitted.

The heater assembly 30 may include a thermal insulator 70. The thermal insulator 70 may be disposed on the sheet 40. The susceptor 50, the electrically conductive track 60, and the thermal insulator 70 may be sequentially disposed in the longitudinal direction of the sheet 40.

The thermal insulator 70 may be made of aerogel. However, the disclosure is not limited thereto, and the thermal insulator 70 may be made of porous silicon, a graphite sheet, etc.

The thermal insulator 70 may be disposed so as to be spaced apart from the electrically conductive track 60 in the longitudinal direction of the sheet 40. One end 71 of the thermal insulator 70 may be spaced apart from the other end 65 of the electrically conductive track 60 by a predetermined distance. The upper end of the thermal insulator 70 may be aligned with the upper end of the sheet 40. The lower end of the thermal insulator 70 may be aligned with the lower end of the sheet 40. In other words, the width of the thermal insulator 70 may be equal to the width WO of the sheet 40.

The sheet 40 may include first to fourth parts 40a, 40b, 40c, and 40d. The fourth part 40d may include a 4-1^{st} part 40da and a 4-2^{nd} part 40db. On the flat sheet 40, the 4-2^{nd} part 40db may extend from the 4-1^{st} part 40da in the longitudinal direction of the sheet 40, and may be opposite the second part 40b with respect to the 4-1^{st} part 40da. The thermal insulator 70 may be disposed on the 4-2^{nd} part 40db. The sheet 40 may be rolled in a direction from one end of the first part 40a toward one end of the 4-2^{nd} part 40db. In the hollow heater assembly 30, the 4-2^{nd} part 40db may be disposed outside the second part 40b or the thermal insulator 70.

At least part of the sheet 40 may be disposed outside the electrically conductive track 60 and may form at least one layer outside the electrically conductive track 60. The thermal insulator 70 may be disposed outside the electrically conductive track 60 and may form at least one layer outside the electrically conductive track 60. The layer formed by the sheet 40 and the layer formed by the thermal insulator 70 may be alternately disposed outside the electrically conductive track 60.

The length of the 4-2^{nd} part 40db defined in the longitudinal direction of the sheet 40 may be greater than the length L2 of the electrically conductive track 60. For example, the length of the 4-2^{nd} part 40db may be at least 1 times the length L2 of the electrically conductive track 60. The 4-2^{nd} part 40db and the thermal insulator 70 may surround the outer sides of the second part 40b and the electrically conductive track 60 one or more turns. The 4-2^{nd} part 40db and the thermal insulator 70 may form at least one layer surrounding the outer sides of the second part 40b and the electrically conductive track 60. For example, the length of the 4-2^{nd} part 40db may be at least 4 times the length L2 of the electrically conductive track 60. The 4-2^{nd} part 40db and the thermal insulator 70 may surround the outer sides of the second part 40b and the electrically conductive track 60 four or more turns. The 4-2^{nd} part 40db and the thermal insulator 70 may form at least four layers surrounding the outer sides of the second part 40b and the electrically conductive track 60.

Accordingly, the thermal insulator 70 and the sheet 40 may alternately form multiple layers outside the electrically conductive track 60, thereby minimizing release of heat generated by the electrically conductive track 60 to the outside of the heater assembly 30.

The heater assembly 30 may have a step formed at a position at which one end 64 and the other end 65 of the electrically conductive track 60 are disposed in the peripheral direction of the insertion space 43. This step may be referred to as a first stepped portion SP1. The heater assembly 30 may have a step formed at positions corresponding to one end 71 and the other end 72 of the thermal insulator 70 in the peripheral direction of the insertion space 43. This step may be referred to as a second stepped portion SP2. The heater assembly 30 may have a step formed at a position at which the gap G1 is formed in the peripheral direction of the insertion space 43. This step may be referred to as a third stepped portion SP3. The second stepped portion SP2 may be disposed so as to be misaligned from the first stepped portion SP1 and/or the third stepped portion SP3 in the radial direction of the insertion space 43 or the radial direction of the heater assembly 30. The second stepped portion SP2 may not overlap the first stepped portion SP1 and/or the third stepped portion SP3 in the radial direction of the insertion space 43 or the radial direction of the heater assembly 30.

The first stepped portion SP1 may be spaced apart from the gap G1 or the third stepped portion SP3 by a predetermined angle, and the second stepped portion SP2 may be spaced apart from the gap G1 or the third stepped portion SP3 by a predetermined angle. For example, an angle c1 formed between the first stepped portion SP1 and the gap G1 or the third stepped portion SP3 with respect to the center O or central axis of the heater assembly 30 may be 80 degrees to 100 degrees. Preferably, the angle c1 formed between the first stepped portion SP1 and the gap G1 or the third stepped portion SP3 may be about 90 degrees. For example, an angle c2 formed between the second stepped portion SP2 and the gap G1 or the third stepped portion SP3 with respect to the center O or central axis of the heater assembly 30 may be 160 degrees to 200 degrees. Preferably, the angle c2 formed between the second stepped portion SP2 and the gap G1 or the third stepped portion SP3 may be about 180 degrees.

A distance by which the thermal insulator 70 is spaced apart from the electrically conductive track 60 on the flat sheet 40 may be in the range of 0.23 to 0.28 times the length L2 of the electrically conductive track 60 defined in the longitudinal direction of the sheet 40. Preferably, the distance by which the thermal insulator 70 is spaced apart from the electrically conductive track 60 may be about 0.25 times the length L2 of the electrically conductive track 60 defined in the longitudinal direction of the sheet 40.

The first stepped portion SP1, the second stepped portion SP2, and the third stepped portion SP3 may be disposed so as to be spaced apart from each other by 90 degrees with respect to the insertion space 43. Because the stepped portions SP1, SP2, and SP3 are disposed symmetrically with each other, it may be possible to more effectively prevent the parts of the heater assembly 30 from deteriorating to different degrees and to evenly heat the stick S inserted into the insertion space 43. In addition, damage to the heater assembly 30 due to external impact may be minimized.

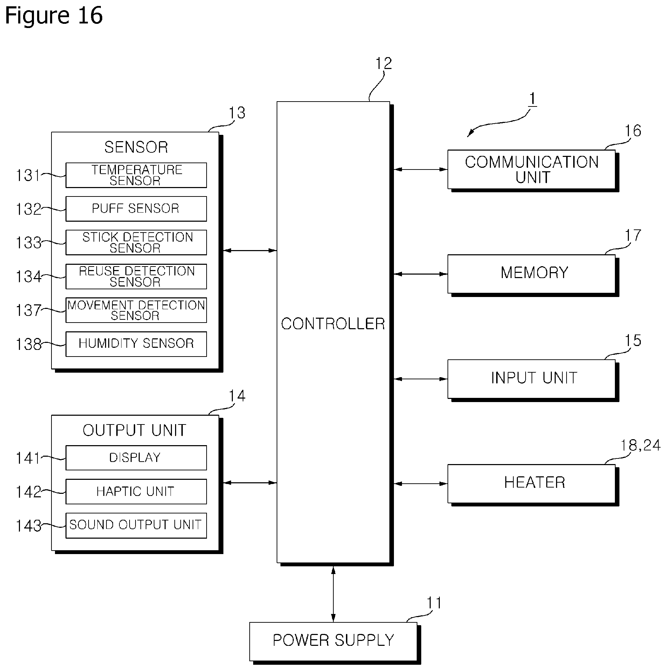

FIG. 16 is a block diagram of an aerosol-generating device 1 according to an embodiment of the present disclosure.

The aerosol-generating device 1 may include a power supply 11, a controller 12, a sensor 13, an output unit 14, an input unit 15, a communication unit 16, a memory 17, and one or more heaters 18 and 24. However, the internal structure of the aerosol-generating device 1 is not limited to that shown in FIG. 16. That is, it is to be understood by those skilled in the art that some of the components shown in FIG. 16 may be omitted or new components may be added depending on the design of the aerosol-generating device 1.

The sensor 13 may detect the state of the aerosol-generating device 1 or the state of the surrounding of the aerosol-generating device 1 and may transmit information about the detected state to the controller 12. Based on the information about the detected state, the controller 12 may control the aerosol-generating device 1 to perform various functions, such as control of operation of the cartridge heater 24 and/or the heater 18, smoking restriction, determination as to whether the stick S and/or the cartridge 19 is inserted, and notification display.

The sensor 13 may include at least one of a temperature sensor 131, a puff sensor 132, an insertion detection sensor 133, a reuse detection sensor 134, a movement detection sensor 137, or a humidity sensor 138.

The temperature sensor 131 may detect temperature to which the cartridge heater 24 and/or the heater 18 is heated. The aerosol-generating device 1 may include a separate temperature sensor configured to detect the temperature of the cartridge heater 24 and/or the heater 18, or the cartridge heater 24 and/or the heater 18 itself may serve as a temperature sensor.

The temperature sensor 131 may output a signal corresponding to the temperature of the cartridge heater 24 and/or the heater 18. For example, the temperature sensor 131 may include a resistive element that changes in resistance value according to a change in temperature of the cartridge heater 24 and/or the heater 18. The temperature sensor may be implemented as a thermistor, which is an element characterized in that the resistance thereof changes with temperature. In this case, the temperature sensor 131 may output a signal corresponding to the resistance value of the resistive element as a signal corresponding to the temperature of the cartridge heater 24 and/or the heater 18. For example, the temperature sensor 131 may be configured as a sensor configured to detect the resistance value of the cartridge heater 24 and/or the heater 18. In this case, the temperature sensor 131 may output a signal corresponding to the resistance value of the cartridge heater 24 and/or the heater 18 as a signal corresponding to the temperature of the cartridge heater 24 and/or the heater 18.

The temperature sensor 131 may be disposed around the power supply 11 to monitor the temperature of the power supply 11. The temperature sensor 131 may be disposed adjacent to the power supply 11. For example, the temperature sensor 131 may be attached to one surface of the battery, which is the power supply 11. For example, the temperature sensor 131 may be mounted on one surface of a printed circuit board.

The temperature sensor 131 may be disposed in the body 10 to detect the internal temperature of the body 10.

The puff sensor 132 may detect a user puff based on various physical changes in a gasflow path. The puff sensor 132 may output a signal corresponding to a puff. For example, the puff sensor 132 may be a pressure sensor. The puff sensor 132 may output a signal corresponding to the internal pressure of the aerosol-generating device. Here, the internal pressure of the aerosol-generating device 1 may correspond to the pressure of the gasflow path through which gas flows. The puff sensor 132 may be disposed at a position corresponding to the gasflow path through which gas flows in the aerosol-generating device 1.

The stick detection sensor 133 may detect insertion and/or removal of the stick S. The stick detection sensor may be referred to as an insertion detection sensor. The insertion detection sensor 133 may detect a signal change caused by insertion and/or removal of the stick S. The insertion detection sensor 133 may be mounted around the insertion space. The insertion detection sensor 133 may detect insertion and/or removal of the stick S according to a change in dielectric constant in the insertion space. For example, the insertion detection sensor 133 may be an inductive sensor and/or a capacitance sensor.

The inductive sensor may include at least one coil. The coil of the inductive sensor may be disposed adjacent to the insertion space. For example, if a magnetic field changes around a coil through which current flows, the characteristics of the current flowing through the coil may change according to Faraday's law of electromagnetic induction. Here, the characteristics of the current flowing through the coil may include a frequency of alternating current, a current value, a voltage value, an inductance value, an impedance value, and the like.

The inductive sensor may output a signal corresponding to the characteristics of the current flowing through the coil. For example, the inductive sensor may output a signal corresponding to the inductance value of the coil.

The capacitance sensor may include a conductive body. The conductive body of the capacitance sensor may be disposed adjacent to the insertion space. The capacitance sensor may output a signal corresponding to the electromagnetic characteristics of the surroundings, for example, the capacitance around the conductive body. For example, if the stick S including a metallic wrapper is inserted into the insertion space, the electromagnetic characteristics around the conductive body may change due to the wrapper of the stick S.

The reuse detection sensor 134 may detect whether the stick S is being reused. The reuse detection sensor 134 may be a color sensor. The color sensor may detect the color of the stick S. The color sensor may detect the color of a portion of the wrapper surrounding the outer side of the stick S. The color sensor may detect, based on light reflected from an object, a value for the optical characteristic corresponding to the color of the object. For example, the optical characteristic may be the wavelength of light. The color sensor may be implemented as a component integrated with a proximity sensor or may be implemented as a component provided separately from a proximity sensor.

At least a portion of the wrapper constituting the stick S may change in color due to an aerosol. The reuse detection sensor 134 may be disposed at a position corresponding to a position at which at least a portion of the wrapper, which changes in color due to an aerosol, is disposed when the stick S is inserted into the insertion space. For example, before the stick S is used by the user, the color of at least a portion of the wrapper may be a first color. In this case, while the aerosol generated by the aerosol-generating device 1 passes through the stick S, at least a portion of the wrapper may become wet due to the aerosol, and accordingly, the color of at least a portion of the wrapper may change to a second color. After changing from the first color to the second color, the color of at least a portion of the wrapper may be maintained in the second color.

The movement detection sensor 137 may detect movement of the aerosol-generating device. The movement detection sensor 137 may be implemented as at least one of an acceleration sensor or a gyro sensor.

The humidity sensor 138 may detect the humidity of the aerosol-generating device and/or the cartridge. The humidity sensor 138 may detect the humidity of outside air and/or the humidity in the cartridge. The humidity sensor 138 may be implemented as a capacitive sensor or the like. The humidity sensor 138 may be disposed on the outer side of the body 10 or may be located in a path through which outside air is introduced to measure the humidity of the surroundings of the aerosol-generating device 1. The humidity sensor 138 may be located in the storage portion C0 of the cartridge 19 to measure the humidity in the cartridge 19.

In addition to the sensors 131 to 138 described above, the sensor 13 may further include at least one of a barometric pressure sensor, a magnetic sensor, a position sensor (GPS), or a proximity sensor. The functions of the sensors could be intuitively deduced by those skilled in the art from the names thereof, and thus detailed descriptions thereof will be omitted.

The output unit 14 may output information about the state of the aerosol-generating device 1 and may provide the information to the user. The output unit 14 may include at least one of a display 141, a haptic unit 142, or a sound output unit 143. However, the disclosure is not limited thereto. If the display 141 and a touchpad form a touchscreen together in a layered structure, the display 141 may be used as not only an output device but also an input device.

The display 141 may visually provide information about the aerosol-generating device 1 to the user. For example, the information about the aerosol-generating device 1 may include various pieces of information, such as a charging/discharging state of the power supply 11 of the aerosol-generating device 1, a preheating state of the heater 18, an insertion/removal state of the stick S and/or the cartridge 19, a mounting/removal state of the upper case, and a use restriction state of the aerosol-generating device 1 (e.g., detection of an abnormal article), and the display 141 may output the information to the outside. For example, the display 141 may be in the form of a light-emitting diode (LED) device. For example, the display 141 may be a liquid crystal display panel (LCD), an organic light-emitting display panel (OLED), or the like.

The haptic unit 142 may convert an electrical signal into mechanical stimulation or electrical stimulation to haptically provide the information about the aerosol-generating device 1 to the user. For example, if initial power is supplied to the cartridge heater 24 and/or the heater 18 for a predetermined amount of time, the haptic unit 142 may generate vibration corresponding to completion of initial preheating. The haptic unit 142 may include a vibration motor, a piezoelectric element, or an electrical stimulation device.

The sound output unit 143 may audibly provide information about the aerosol-generating device 1 to the user. For example, the sound output unit 143 may convert an electrical signal into an acoustic signal and may output the acoustic signal to the outside.

The power supply 11 may supply power used for operation of the aerosol-generating device 1. The power supply 11 may supply power so that the cartridge heater 24 and/or the heater 18 is heated. In addition, the power supply 11 may supply power necessary for operation of the other components provided in the aerosol-generating device 1, such as the sensor 13, the output unit 14, the input unit 15, the communication unit 16, and the memory 17. The power supply 11 may be a rechargeable battery or a disposable battery. For example, the power supply 11 may be a lithium polymer (LiPoly) battery. However, the disclosure is not limited thereto.

Although not shown in FIG. 16, the aerosol-generating device 1 may further include a power supply protection circuit. The power supply protection circuit may be electrically connected to the power supply 11 and may include a switching element.

The power supply protection circuit may block an electric path to the power supply 11 according to a predetermined condition. For example, the power supply protection circuit may block the electric path to the power supply 11 when the voltage level of the power supply 11 is equal to or higher than a first voltage corresponding to overcharge. For example, the power supply protection circuit may block the electric path to the power supply 11 when the voltage level of the power supply 11 is lower than a second voltage corresponding to overdischarge.

The heater 18 may receive power from the power supply 11 to heat the medium or the aerosol-generating substance in the stick S. Although not shown in FIG. 16, the aerosol-generating device 1 may further include a power conversion circuit (e.g., DC-to-DC converter) configured to convert the power of the power supply 11 and supply the converted power to the cartridge heater 24 and/or the heater 18. In addition, if the aerosol-generating device 1 generates an aerosol in an induction heating way, the aerosol-generating device 1 may further include a DC-to-AC converter configured to convert direct current power of the power supply 11 into alternating current power.

The controller 12, the sensor 13, the output unit 14, the input unit 15, the communication unit 16, and the memory 17 may perform functions using power received from the power supply 11. Although not shown in FIG. 16, the aerosol-generating device may further include a power conversion circuit configured to convert the power of the power supply 11 and supply the converted power to the respective components, for example, a low dropout (LDO) circuit or a voltage regulator circuit. In addition, although not shown in FIG. 16, a noise filter may be provided between the power supply 11 and the heater 18. The noise filter may be a low-pass filter. The low-pass filter may include at least one inductor and a capacitor. The cutoff frequency of the low-pass filter may correspond to the frequency of a high-frequency switching current applied from the power supply 11 to the heater 18. The low-pass filter may prevent high-frequency noise components from being applied to the sensor 13, for example, the insertion detection sensor 133.

In an embodiment, the cartridge heater 24 and/or the heater 18 may be formed of any suitable electrically resistive material. For example, the suitable electrically resistive material may be a metal or a metal alloy including titanium, zirconium, tantalum, platinum, nickel, cobalt, chromium, hafnium, niobium, molybdenum, tungsten, tin, gallium, manganese, iron, copper, stainless steel, or nichrome. However, the disclosure is not limited thereto. In addition, the heater 18 may be implemented as a metal wire, a metal plate on which an electrically conductive track is disposed, or a ceramic heating element. However, the disclosure is not limited thereto.

In another embodiment, the heater 18 may be an induction heater. For example, the heater 18 may include a susceptor configured to generate heat through a magnetic field applied by a coil, thereby heating the aerosol-generating substance.

The input unit 15 may receive information input from the user or may output information to the user. For example, the input unit 15 may be a touch panel. The touch panel may include at least one touch sensor configured to detect touch. For example, the touch sensor may include a capacitive touch sensor, a resistive touch sensor, a surface acoustic wave touch sensor, an infrared touch sensor, etc. However, the disclosure is not limited thereto.

The display 141 and the touch panel may be implemented as an integrated panel. For example, the touch panel may be inserted into the display 141 (on-cell type touch panel or in-cell type touch panel). For example, the touch panel may be added onto the display 141 (add-on type touch panel).

Meanwhile, the input unit 15 may include a button, a keypad, a dome switch, a jog wheel, a jog switch, etc. However, the disclosure is not limited thereto.

The memory 17 may be hardware storing various pieces of data processed in the aerosol-generating device 1. The memory 17 may store data processed and to be processed by the controller 12. The memory 17 may include at least one type of storage medium among a flash memory type memory, a hard disk type memory, a multimedia card micro type memory, a card type memory (e.g., SD or XD memory), a random access memory (RAM), a static random access memory (SRAM), a read-only memory (ROM), an electrically erasable programmable read-only memory (EEPROM), a programmable read-only memory (PROM), a magnetic memory, a magnetic disk, and an optical disc. The memory 17 may store data on an operation time of the aerosol-generating device 1, the maximum number of puffs, the current number of puffs, at least one temperature profile, and the user's smoking pattern.

The communication unit 16 may include at least one component for communication with other electronic devices. For example, the communication unit 16 may include at least one of a short-range communication unit or a wireless communication unit.

The short-range communication unit may include a Bluetooth communication unit, a Bluetooth low energy (BLE) communication unit, a near-field communication unit, a WLAN (Wi-Fi) communication unit, a Zigbee communication unit, an infrared data association (IrDA) communication unit, a Wi-Fi direct (WFD) communication unit, an ultra-wideband (UWB) communication unit, an Ant+ communication unit, etc. However, the disclosure is not limited thereto.

The wireless communication unit may include a cellular network communication unit, an Internet communication unit, a computer network (e.g., LAN or WAN) communication unit, etc. However, the disclosure is not limited thereto.

Although not shown in FIG. 16, the aerosol-generating device 1 may further include a connection interface such as a universal serial bus (USB) interface, and may be connected to other external devices through the connection interface such as a USB interface to transmit and receive information or charge the power supply 11.

The controller 12 may control overall operation of the aerosol-generating device 1. In an embodiment, the controller 1 may include at least one processor. The processor may be implemented as an array of a plurality of logic gates or may be implemented as a combination of a general-purpose microprocessor and a memory in which a program executable in the microprocessor is stored. Also, it will be understood by those skilled in the art that the processor can be implemented in other forms of hardware.

The controller 12 may control the supply of power from the power supply 11 to the heater 18 to control the temperature of the heater 18. The controller 12 may control the temperature of the cartridge heater 24 and/or the heater 18 based on the temperature of the cartridge heater 24 and/or the heater 18 detected by the temperature sensor 131. The controller 12 may control the power supplied to the cartridge heater 24 and/or the heater 18 based on the temperature of the cartridge heater 24 and/or the heater 18. For example, the controller 12 may determine a target temperature of the cartridge heater 24 and/or the heater 18 based on the temperature profile stored in the memory 17.

The aerosol-generating device 1 may include a power supply circuit (not shown) electrically connected to the power supply 11 between the power supply 11 and the cartridge heater 24 and/or the heater 18. The power supply circuit may be electrically connected to the cartridge heater 24, the heater 18, or the induction coil 181. The power supply circuit may include at least one switching element. The switching element may be implemented as a bipolar junction transistor (BJT), a field effect transistor (FET), or the like. The controller 12 may control the power supply circuit.

The controller 12 may control switching of the switching element of the power supply circuit to control the supply of power. The power supply circuit may be an inverter configured to convert direct current power output from the power supply 11 into alternating current power. For example, the inverter may be composed of a full-bridge circuit or a half-bridge circuit including a plurality of switching elements.

The controller 12 may turn on the switching element so that power is supplied from the power supply 11 to the cartridge heater 24 and/or the heater 18. The controller 12 may turn off the switching element so that the supply of power to the cartridge heater 24 and/or the heater 18 is interrupted. The controller 12 may control the frequency and/or the duty ratio of the current pulse input to the switching element to control the current supplied from the power supply 11.

The controller 12 may control switching of the switching element of the power supply circuit to control the voltage output from the power supply 11. The power conversion circuit may convert the voltage output from the power supply 11. For example, the power conversion circuit may include a buck-converter configured to step down the voltage output from the power supply 11. For example, the power conversion circuit may be implemented as a buck-boost converter, a Zener diode, or the like.

The controller 12 may control on/off operation of the switching element included in the power conversion circuit to control the level of the voltage output from the power conversion circuit. If the switching element is maintained in an on state, the level of the voltage output from the power conversion circuit may correspond to the level of the voltage output from the power supply 11. The duty ratio for the on/off operation of the switching element may correspond to a ratio of the voltage output from the power conversion circuit to the voltage output from the power supply 11. As the duty ratio for the on/off operation of the switching element decreases, the level of the voltage output from the power conversion circuit may decrease. The heater 18 may be heated based on the voltage output from the power conversion circuit.

The controller 12 may control the supply of power to the heater 18 using at least one of a pulse width modulation (PWM) scheme or a proportional-integral-differential (PID) scheme.

For example, the controller 12 may perform control using the PWM scheme such that a current pulse having a predetermined frequency and a predetermined duty ratio is supplied to the heater 18. The controller 12 may control the frequency and the duty ratio of the current pulse to control the power supplied to the heater 18.

For example, the controller 12 may determine, based on the temperature profile, a target temperature to be controlled. The controller 12 may control the power supplied to the heater 18 using the PID scheme, which is a feedback control scheme using a difference value between the temperature of the heater 18 and the target temperature, a value obtained by integrating the difference value with respect to time, and a value obtained by differentiating the difference value with respect to time.

The controller 12 may prevent the cartridge heater 24 and/or the heater 18 from overheating. For example, the controller 12 may control operation of the power conversion circuit such that the supply of power to the cartridge heater 24 and/or the heater 18 is interrupted when the temperature of the cartridge heater 24 and/or the heater 18 exceeds a predetermined limit temperature. For example, the controller 12 may reduce the amount of power supplied to the cartridge heater 24 and/or the heater 18 by a predetermined ratio when the temperature of the cartridge heater 24 and/or the heater 18 exceeds a predetermined limit temperature. For example, when the temperature of the cartridge heater 24 exceeds a limit temperature, the controller 12 may determine that the aerosol-generating substance contained in the cartridge 19 has been exhausted and may interrupt the supply of power to the cartridge heater 24.

The controller 12 may control charging/discharging of the power supply 11. The controller 12 may check the temperature of the power supply 11 based on an output signal from the temperature sensor 131.

If a power line is connected to a battery terminal of the aerosol-generating device 1, the controller 12 may determine whether the temperature of the power supply 11 is equal to or higher than a first limit temperature, which is a reference temperature at which charging of the power supply 11 is interrupted. When the temperature of the power supply 11 is lower than the first limit temperature, the controller 12 may perform control such that the power supply 11 is charged based on a predetermined charging current. When the temperature of the power supply 11 is equal to or higher than the first limit temperature, the controller 12 may interrupt charging of the power supply 11.

When the aerosol-generating device 1 is in an on state, the controller 12 may determine whether the temperature of the power supply 11 is equal to or higher than a second limit temperature, which is a reference temperature at which discharging of the power supply 11 is interrupted. When the temperature of the power supply 11 is lower than the second limit temperature, the controller 12 may perform control such that the power stored in the power supply 11 is used. When the temperature of the power supply 11 is equal to or higher than the second limit temperature, the controller 12 may interrupt use of the power stored in the power supply 11.

The controller 12 may calculate or determine the remaining amount of power stored in the power supply 11. For example, the controller 12 may calculate or determine the remaining capacity of the power supply 11 based on a voltage and/or current detection value of the power supply 11.

The controller 12 may determine whether the stick S is inserted into the insertion space using the insertion detection sensor 133. The controller 12 may determine that the stick S has been inserted based on an output signal from the insertion detection sensor 133. Upon determining that the stick S has been inserted into the insertion space, the controller 12 may perform control such that power is supplied to the cartridge heater 24 and/or the heater 18. For example, the controller 12 may supply power to the cartridge heater 24 and/or the heater 18 based on the temperature profile stored in the memory 17.

The controller 12 may determine whether the stick S is removed from the insertion space. For example, the controller 12 may determine whether the stick S is removed from the insertion space using the insertion detection sensor 133. For example, the controller 12 may determine that the stick S has been removed from the insertion space when the temperature of the heater 18 is equal to or higher than a limit temperature or when the temperature change slope of the heater 18 is equal to or greater than a predetermined slope. Upon determining that the stick S has been removed from the insertion space, the controller 12 may interrupt the supply of power to the cartridge heater 24 and/or the heater 18.

The controller 12 may control a power supply time and/or the amount of power supplied to the heater 18 depending on the state of the stick S detected by the sensor 13. The controller 12 may check, based on a look-up table, a level range within which the level of a signal from the capacitance sensor is included. The controller 12 may determine the amount of moisture in the stick S based on the checked level range.

When the stick S is in a highly humid state, the controller 12 may control a time during which power is supplied to the heater 18 to increase a preheating time of the stick S compared to when the stick S is in a normal state.

The controller 12 may determine whether the stick S inserted into the insertion space is a reused stick using the reuse detection sensor 134. For example, the controller 12 may compare a sensing value of a signal from the reuse detection sensor with a first reference range within which the first color is included, and may determine that the stick S is not a reused stick when the sensing value is within the first reference range. For example, the controller 12 may compare a sensing value of a signal from the reuse detection sensor with a second reference range within which the second color is included, and may determine that the stick S is a reused stick when the sensing value is within the second reference range. Upon determining that the stick S is a reused stick, the controller 12 may interrupt the supply of power to the cartridge heater 24 and/or the heater 18.

The controller 12 may determine whether the aerosol-generating substance in the cartridge 19 is exhausted. For example, the controller 12 may apply power to preheat the cartridge heater 24 and/or the heater 18, and may determine whether the temperature of the cartridge heater 24 exceeds a limit temperature in a preheating section. When the temperature of the cartridge heater 24 exceeds the limit temperature, the controller 12 may determine that the aerosol-generating substance in the cartridge 19 has been exhausted. Upon determining that the aerosol-generating substance in the cartridge 19 has been exhausted, the controller 12 may interrupt the supply of power to the cartridge heater 24 and/or the heater 18.

The controller 12 may make a determination as to a user puff using the puff sensor 132. For example, the controller 12 may determine, based on a sensing value of a signal from the puff sensor, whether a puff occurs. For example, the controller 12 may determine the intensity of a puff based on a sensing value of a signal from the puff sensor 132. When the number of puffs reaches a predetermined maximum number of puffs or when no puff is detected for a predetermined time period or longer, the controller 12 may interrupt the supply of power to the cartridge heater 24 and/or the heater 18.

The controller 12 may control the output unit 14 based on a result of detection by the sensor 13. For example, when the number of puffs counted through the puff sensor 132 reaches a predetermined number, the controller 12 may notify the user that operation of the aerosol-generating device 1 will end soon through at least one of the display 141, the haptic unit 142, or the sound output unit 143. For example, upon determining that the stick S is not present in the insertion space, the controller 12 may notify the user of the determination result through the output unit 14. For example, upon determining that the cartridge 19 and/or the upper case has not been mounted, the controller 12 may notify the user of the determination result through the output unit 14. For example, the controller 12 may transmit information about the temperature of the cartridge heater 24 and/or the heater 18 to the user through the output unit 14.

Upon determining that a predetermined event has occurred, the controller 12 may store a history of the corresponding event in the memory 17 and may update the history. The event may include events performed in the aerosol-generating device 1, such as detection of insertion of the stick S, commencement of heating of the stick S, detection of puff, termination of puff, detection of overheating of the cartridge heater 24 and/or the heater 18, detection of application of overvoltage to the cartridge heater 24 and/or the heater 18, termination of heating of the stick S, on/off operation of the aerosol-generating device 1, commencement of charging of the power supply 11, detection of overcharging of the power supply 11, and termination of charging of the power supply 11. The history of the event may include the occurrence date and time of the event and log data corresponding to the event. For example, when the predetermined event is detection of insertion of the stick S, the log data corresponding to the event may include data on a value detected by the insertion detection sensor 133. For example, when the predetermined event is detection of overheating of the cartridge heater 24 and/or the heater 18, the log data corresponding to the event may include data on the temperature of the cartridge heater 24 and/or the heater 18, the voltage applied to the cartridge heater 24 and/or the heater 18, and the current flowing through the cartridge heater 24 and/or the heater 18.

The controller 12 may perform control for formation of a communication link with an external device such as a user's mobile terminal. Upon receiving data on authentication from an external device via the communication link, the controller 12 may release restriction on use of at least one function of the aerosol-generating device 1. Here, the data on authentication may include data indicating completion of user authentication for the user corresponding to the external device. The user may perform user authentication through the external device. The external device may determine, based on the user's birthday or an identification number indicating the user, whether the user data is valid, and may receive data on the authority for use of the aerosol-generating device 1 from an external server. The external device may transmit data indicating completion of user authentication to the aerosol-generating device 1 based on the data on the use authority. When the user authentication is completed, the controller 12 may release restriction on use of at least one function of the aerosol-generating device 1. For example, when the user authentication is completed, the controller 12 may release restriction on use of a heating function for supplying power to the heater 18.

The controller 12 may transmit data on the state of the aerosol-generating device 1 to the external device through the communication link established with the external device. Based on the received state data, the external device may output the remaining capacity of the power supply 11 or the operation mode of the aerosol-generating device 1 through a display of the external device.

The external device may transmit a location search request to the aerosol-generating device 1 based on an input for commencement of search for the location of the aerosol-generating device 1. Upon receiving the location search request from the external device, the controller 12 may perform control, based on the received location search request, such that at least one of the output devices performs operation corresponding to location search. For example, the haptic unit 142 may generate vibration in response to the location search request. For example, the display 141 may output objects corresponding to location search and termination of search in response to the location search request.

Upon receiving firmware data from the external device, the controller 12 may perform control such that the firmware is updated. The external device may check the current version of the firmware of the aerosol-generating device 1 and may determine whether there is a new version of firmware. Upon receiving an input requesting firmware download, the external device may receive new version of firmware data and may transmit the new version of firmware data to the aerosol-generating device 1. Upon receiving the new version of firmware data, the controller 12 may perform control such that the firmware of the aerosol-generating device 1 is updated.

The controller 12 may transmit data on a value detected by the at least one sensor 13 to an external server (not shown) through the communication unit 16, and may receive, from the server, and store a learning model generated by learning the detected value through machine learning such as deep learning. The controller 12 may perform operation of determining the user's puff pattern and operation of generating the temperature profile using the learning model received from the server. The controller 12 may store data on the value detected by the at least one sensor 13 and data for training an artificial neural network (ANN) in the memory 17. For example, the memory 17 may store a database for each of the components provided in the aerosol-generating device 1 and weights and biases constituting the structure of the artificial neural network (ANN) in order to train the artificial neural network (ANN). The controller 12 may learn data on the value detected by the at least one sensor 13, the user's puff pattern, and the temperature profile, which are stored in the memory 17, and may generate at least one learning model used to determine the user's puff pattern and to generate the temperature profile.

As described above, according to at least one of the embodiments of the present disclosure, because the heater assembly is formed in such a manner that the thin-film-type susceptor and the electrically conductive pattern disposed on one sheet are rolled together with the sheet, the size of the device may be reduced.

According to at least one of the embodiments of the present disclosure, because the heater assembly is formed in such a manner that the thin-film-type susceptor and the electrically conductive pattern disposed on one sheet are rolled together with the sheet, the process of producing the heater assembly may be simplified.

According to at least one of the embodiments of the present disclosure, because the stepped portions formed when the sheet is rolled are disposed so as to be misaligned from each other, it may be possible to prevent parts of the heater assembly from deteriorating to different degrees.

According to at least one of the embodiments of the present disclosure, because the stepped portions formed when the sheet is rolled are disposed so as to be misaligned from each other, the stick inserted into the heater assembly may be evenly heated.

According to at least one of the embodiments of the present disclosure, because the thin-film-type susceptor defines the insertion space and directly contacts the stick inserted into the insertion space, efficiency of transfer of heat to the stick may be increased.

According to at least one of the embodiments of the present disclosure, because the sheet surrounds the outer side of the electrically conductive pattern multiple times, the heater assembly may be effectively sealed, and release of heat to the outside may be minimized.

According to at least one of the embodiments of the present disclosure, it may be possible to ensure the rigidity of the heater assembly due to the brackets capable of fixing the upper end and lower end of the heater assembly.

According to at least one of the embodiments of the present disclosure, because the susceptor and the electrically conductive pattern are attached to the sheet through thermal fusion, the bonding structure of the heater assembly may be simplified.

Referring to FIGs. 1 to 16, an aerosol-generating device 1 in accordance with one aspect of the present disclosure may include a body 10, a power supply 11 mounted to the body 10, and a hollow heater assembly 30 mounted to the body 10 and providing an insertion space 43 with one side open, the heater assembly 30 may include a sheet 40 formed to be elongated, a susceptor 50 attached to the sheet 40, and an electrically conductive track 60 attached to the sheet 40 and configured to generate heat in response to power received from the power supply 11, and the susceptor 50 may be disposed so as to be spaced apart from the electrically conductive track 60 in the longitudinal direction of the sheet 40.

In addition, in accordance with another aspect of the present disclosure, a spacing distance A1 between the susceptor 50 and the electrically conductive track 60 may be in the range of 0.23 to 0.28 times the length L1 of the susceptor 50 defined in the longitudinal direction of the sheet 40.

In addition, in accordance with another aspect of the present disclosure, a spacing distance A1 between the susceptor 50 and the electrically conductive track 60 may be in the range of 0.45 to 0.55 times the length L1 of the susceptor 50 defined in the longitudinal direction of the sheet 40.

In addition, in accordance with another aspect of the present disclosure, a spacing distance A1 between the susceptor 50 and the electrically conductive track 60 may be less than the length L2 of the electrically conductive track 60 defined in the longitudinal direction of the sheet 40.

In addition, in accordance with another aspect of the present disclosure, the heater assembly 30 may include a gap G1 formed between one end 51 and the other end 52 of the susceptor 50 in the peripheral direction of the insertion space 43.

In addition, in accordance with another aspect of the present disclosure, the heater assembly 30 may include a first stepped portion SP1 formed at positions corresponding to one end 64 and the other end 65 of the electrically conductive track 60 in the peripheral direction of the insertion space 43, and the first stepped portion SP1 may be disposed so as to be misaligned with the gap G1 in the radial direction of the insertion space 43.

In addition, in accordance with another aspect of the present disclosure, the first stepped portion SP1 and the gap G1 may form an angle of 80 degrees to 100 degrees therebetween with respect to the center of the heater assembly 30.

In addition, in accordance with another aspect of the present disclosure, the first stepped portion SP1 and the gap G1 may form an angle of 160 degrees to 200 degrees therebetween with respect to the center of the heater assembly 30.

In addition, in accordance with another aspect of the present disclosure, the heater assembly 30 may include a thermal insulator 70 attached to the sheet 40 and disposed so as to be spaced apart from the electrically conductive track 60 in the longitudinal direction of the sheet 40.

In addition, in accordance with another aspect of the present disclosure, the susceptor 50, the electrically conductive track 60, and the thermal insulator 70 may be sequentially disposed on the sheet 40 in the longitudinal direction of the sheet 40, the heater assembly 30 may include a second stepped portion SP2 formed at positions corresponding to one end 71 and the other end 72 of the thermal insulator 70 in the peripheral direction of the insertion space 43, and the second stepped portion SP2 may be disposed so as to be misaligned with the gap G1 and the first stepped portion SP1 in the radial direction of the insertion space 43.

In addition, in accordance with another aspect of the present disclosure, the first stepped portion SP1 and the gap G1 may form an angle of 80 degrees to 100 degrees therebetween with respect to the center of the heater assembly 30, and the second stepped portion SP2 and the gap G1 may form an angle of 160 degrees to 200 degrees therebetween with respect to the center of the heater assembly 30.

In addition, in accordance with another aspect of the present disclosure, the susceptor 50 and the electrically conductive track 60 may be disposed on one surface 41 of the sheet 40, and the heater assembly 30 may be formed by rolling the sheet 40 in the longitudinal direction of the sheet 40 so that the surface 41 faces the insertion space 43.

In addition, in accordance with another aspect of the present disclosure, the sheet 40 may include a first part 40a formed to allow the susceptor 50 to be disposed thereon, a second part 40b formed to allow the electrically conductive track 60 to be disposed thereon, a third part 40c located between the first part 40a and the second part 40b, and a fourth part 40d extending from the second part 40b in the longitudinal direction of the sheet 40 so as to be opposite the third part 40c with respect to the second part 40b, and the heater assembly 30 may include layers formed in the order of the susceptor 50, the first part 40a, the electrically conductive track 60, and the fourth part 40d in the radially outward direction from the insertion space 43.

In addition, in accordance with another aspect of the present disclosure, the aerosol-generating device may include a first bracket 91 coupled to one side of the heater assembly 30 corresponding to an opening of the insertion space 43 and including an insertion hole 913 formed therein so as to communicate with the insertion space 43 and a second bracket 92 coupled to the opposite side of the heater assembly 30 to block a portion of the opposite side of the insertion space 43.

In addition, in accordance with another aspect of the present disclosure, the sheet 40 may include polyimide, and the susceptor 50 and the electrically conductive track 60 may be attached to the sheet 40 through thermal fusion.

Certain embodiments or other embodiments of the disclosure described above are not mutually exclusive or distinct from each other. Any or all elements of the embodiments of the disclosure described above may be combined with another or combined with each other in configuration or function.

For example, a configuration "A" described in one embodiment of the disclosure and the drawings and a configuration "B" described in another embodiment of the disclosure and the drawings may be combined with each other. Namely, although the combination between the configurations is not directly described, the combination is possible except in the case where it is described that the combination is impossible.

The above detailed description is not intended to be construed to limit the disclosure in all aspects and is to be considered by way of example. The scope of the disclosure should be determined by reasonable interpretation of the appended claims, and all equivalent modifications made without departing from the disclosure should be included in the following claims.

## Claims

1. An aerosol-generating device comprising:
a body;
a power supply mounted to the body; and
a hollow heater assembly mounted to the body, the heater assembly providing an insertion space with one side open,
wherein the heater assembly comprises:
a sheet formed to be elongated;
a susceptor attached to the sheet; and
an electrically conductive track attached to the sheet, the electrically conductive track being configured to generate heat in response to power received from the power supply, and
wherein the susceptor is disposed so as to be spaced apart from the electrically conductive track in a longitudinal direction of the sheet.

2. The aerosol-generating device according to claim 1, wherein a spacing distance between the susceptor and the electrically conductive track is in a range of 0.23 to 0.28 times a length of the susceptor defined in the longitudinal direction of the sheet.

3. The aerosol-generating device according to claim 1, wherein a spacing distance between the susceptor and the electrically conductive track is in a range of 0.45 to 0.55 times a length of the susceptor defined in the longitudinal direction of the sheet.

4. The aerosol-generating device according to claim 1, wherein a spacing distance between the susceptor and the electrically conductive track is less than a length of the electrically conductive track defined in the longitudinal direction of the sheet.

5. The aerosol-generating device according to claim 1, wherein the heater assembly comprises a gap formed between one end and another end of the susceptor in a peripheral direction of the insertion space.

6. The aerosol-generating device according to claim 5, wherein the heater assembly comprises a first stepped portion formed at positions corresponding to one end and another end of the electrically conductive track in the peripheral direction of the insertion space, and
wherein the first stepped portion is disposed so as to be misaligned with the gap in a radial direction of the insertion space.

7. The aerosol-generating device according to claim 6, wherein the first stepped portion and the gap form an angle of 80 degrees to 100 degrees therebetween with respect to a center of the heater assembly.

8. The aerosol-generating device according to claim 6, wherein the first stepped portion and the gap form an angle of 160 degrees to 200 degrees therebetween with respect to a center of the heater assembly.

9. The aerosol-generating device according to claim 6, wherein the heater assembly further comprises a thermal insulator attached to the sheet and disposed so as to be spaced apart from the electrically conductive track in the longitudinal direction of the sheet.

10. The aerosol-generating device according to claim 9, wherein the susceptor, the electrically conductive track, and the thermal insulator are sequentially disposed on the sheet in the longitudinal direction of the sheet,
wherein the heater assembly comprises a second stepped portion formed at positions corresponding to one end and another end of the thermal insulator in the peripheral direction of the insertion space, and
wherein the second stepped portion is disposed so as to be misaligned with the gap and the first stepped portion in the radial direction of the insertion space.

11. The aerosol-generating device according to claim 10, wherein the first stepped portion and the gap form an angle of 80 degrees to 100 degrees therebetween with respect to a center of the heater assembly, and
wherein the second stepped portion and the gap form an angle of 160 degrees to 200 degrees therebetween with respect to the center of the heater assembly.

12. The aerosol-generating device according to claim 1, wherein the susceptor and the electrically conductive track are disposed on one surface of the sheet, and
wherein the heater assembly is formed by rolling the sheet in the longitudinal direction of the sheet so that the one surface faces the insertion space.

13. The aerosol-generating device according to claim 12, wherein the sheet comprises:
a first part formed to allow the susceptor to be disposed thereon;
a second part formed to allow the electrically conductive track to be disposed thereon;
a third part located between the first part and the second part; and
a fourth part extending from the second part in the longitudinal direction of the sheet, the fourth part being opposite the third part with respect to the second part, and
wherein the heater assembly comprises layers formed in an order of the susceptor, the first part, the electrically conductive track, and the fourth part in a radially outward direction from the insertion space.

14. The aerosol-generating device according to claim 1, further comprising:
a first bracket coupled to one side of the heater assembly corresponding to an opening of the insertion space, the first bracket comprising an insertion hole formed therein so as to communicate with the insertion space; and
a second bracket coupled to an opposite side of the heater assembly to block a portion of an opposite side of the insertion space.

15. The aerosol-generating device according to claim 1, wherein the sheet comprises polyimide, and
wherein the susceptor and the electrically conductive track are attached to the sheet through thermal fusion.
